(19) **Europäisches Patentamt / European Patent Office / Office européen des brevets**

(11) **EP 3 138 402 A1**

(12) **DEMANDE DE BREVET EUROPEEN**

(43) Date de publication:
08.03.2017 Bulletin 2017/10

(51) Int Cl.:
*A01N 59/26* (2006.01)     *A01N 63/02* (2006.01)

(21) Numéro de dépôt: **16186924.3**

(22) Date de dépôt: **02.09.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **04.09.2015 FR 1501836**

(71) Demandeur: **Polyor SARL**
**54000 Nancy (FR)**

(72) Inventeur: **CLAUDE, Pierre-Philippe**
**54000 Nancy (FR)**

(54) **PROCÉDÉ DE FERTILISATION EN PHOSPHORE DE CULTURES AGRONOMIQUES**

(57) Procédé de fertilisation en P de cultures agronomiques comportant l'application d'engrais P starter et/ou complémentaires à la culture suivante, cela en présence des résidus de culture au sol (RCS) de la culture précédente préalablement bactérisés et enfouis au début de l'interculture.

**Description**

**DOMAINE TECHNIQUE DE L'INVENTION**

L'agronomie, et plus particulièrement la fertilisation N et P des grandes cultures agronomiques. Il est question d'engrais P dits "starter", et de bactérisation des résidus de culture au sol (RCS).

**ÉTAT DE LA TECHNIQUE**

Les dépôts miniers de P (phosphore) se raréfient et sont géographiquement dispersées (Vaccari 2009). Bien que relativement abondante, la roche phosphatée de bonne qualité est elle disponible que dans certains endroits, notamment au Maroc avec plus de 70% des réserves prouvées, et plus récemment l'Irak, l'Algérie, la Syrie et la Caroline du Nord (USA). Une telle rareté est cependant gérable si de bonnes pratiques agricoles étaient adoptées (Beardsley 2011).

**Biodisponibilité et diffusion du P en sols arables**

Malgré les 2 à 3 tonnes de P par hectare en principe amplement pour alimenter la culture céréalière exportant que 20 à 25 kg-P/ha/an, sa biodisponibilité est problématique (Fardeau et al. 1988, Olsen et al. 1954, Watson et Mullen 2007). Selon Morel 2002 la quantité brute (Pr ; mg P kg-1 sol) des ions P *transférés* entre le sol et sa solution intègre deux variables, la durée (t, minute) du transfert et la concentration (Cp ; mg P L-1) de la solution de sol ;

$$P_r = v\, C_p^{\,w}\, t^{\,p}$$

v, w et p sont des paramètres déterminés par régression non-linéaire : v correspond à la quantité d'ions de P inorganique (Pi ; essentielle des ions $PO_4^-$) transférés en 1 minute entre le sol et la solution pour une concentration Cp=1 mg P/L ; w rend compte de l'effet de Cp alors que p rend compte de l'effet du temps. La valeur de Pr est bornée par la teneur en Pi du sol, idem donc pour ce qui concerne $IMMP_{MICI}$, $IMMP_{bac}$ et $IMMP_{BAC}$ (*infra*). Du coup, Morel 2002 définit le pouvoir tampon du sol (PTS, ou ici "PT" ; (mg-P/kg-sol) / (mg-P/L)) vis-à-vis du Pi en solution ;

$$PT = vw\, C_p^{\,(w-1)}\, t^{\,p}$$

PTS servira lors de la préconisation agronomique des inocula BAC les plus capables d'IMMP (immobilisation du P du sol). En principe, Pr prend mieux en compte les cinétiques de transfert sol ↔ solution du sol du P que d'autres indices (eg. $P_{Olsen}$, $P_{Dyer}$, $P_{Joret-Hebert}$, etc.).
Il existe aussi deux modes de calcul des coefficients de diffusion du P dans le sol. Selon Föhse et al. 1991, le coefficient de diffusion effective, De, est ;

$$De = D_1 \times \theta \times (f\ /\ b)$$

lorsque que $D_1$ (aire/temps) est le coefficient de diffusion aqueuse de H2PO4- à 25 degrés C, θ est la teneur volumétrique en eau du sol (v/v), f est un facteur d'impédance proportionnel à θ (eg. 1,58 x θ - 0,17), et b est le pouvoir tampon du sol (PTS). Alternativement un coefficient de diffusion pour Pi selon Bhadoria et al. 1991 ;

$$\bar{D}_e = \frac{M_{i^2}\,\pi}{A^2\,(C_2 - C_1)^2\, t}$$

C1 et c2 étant les concentrations en P (p/p) de deux compartiments du sol, t le temps, A l'aire du plan bidimensionnelle franchi par les ions P lors de leurs transfert réciproque C1 ↔ C2, et enfin Mt la quantité de P diffusée de C2 vers C1. En sol arable (Bhadoria et al. 1991) contenant 43 et 64 mg-P / kg-sol dans C1 et C2, respectivement, sur une période de diffusion de 7 heures (25 200 secondes) à travers de plan de 14 cm2 de superficie De sera de 1 x 10-9 cm2 / seconde, ou encore 3600 cm2/heure. Il ainsi est possible d'obtenir une approximation de Mt ;

$$Mt = sqrt(((Dc*3600*1E-09)*(A*(C1-C2)^2*t))/\pi)$$

Voir en ce sens le code R pour le modèle DICP au Tableau 7. Il s'agitde diffusion sur de courtes distances de l'ordre du millimètre ; Bhadoria et al. 1991 est donc ici plus pertinent que Fôhse et al. 1991 tenant compte de l'impédance, phénomène peu effectif sur de si petites distances.

### L'efficacité relative des engrais P starter et complémentaire.

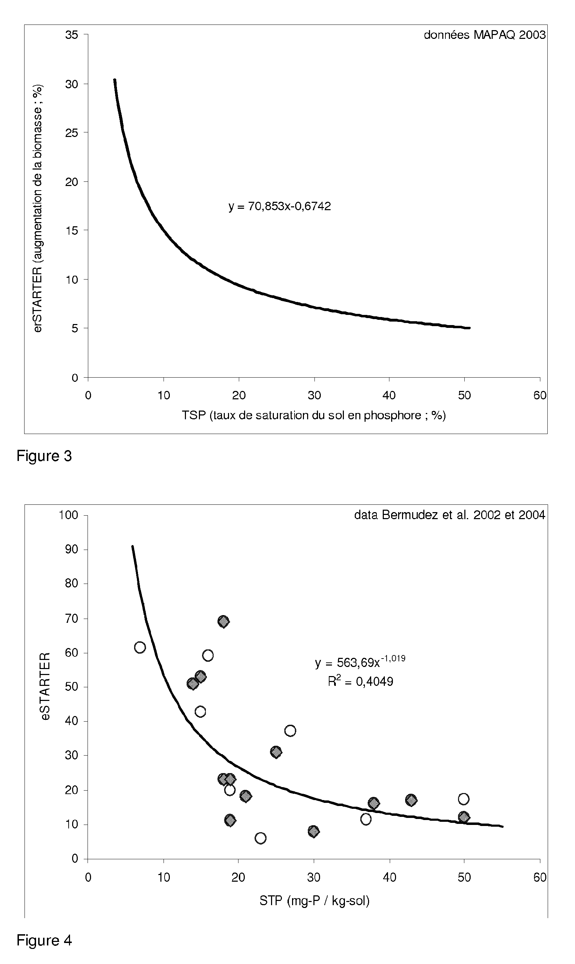

Pi étant sujets à fixation physico-chimique, les engrais dits "starter" (de démarrage) sont localisés en proximité des semences de manière à minimiser le contacte sol : engrais. Or, l'efficacité de ces engrais (eStarter) sur cultures de printemps telles que le maïs est fonction de la richesse en P du sol, soit en terme de la teneur en P du sol (STP; mg-P / kg-sol ; Bermudez et al. 2002 et 2004 - Figure 4), du pouvoir tampon P su sol (PTS ; (mg-P/kg-sol)/(mg-P/L)), ou encore du taux de saturation en P sol (TSP ; MAPAQ 2003 - Figure 3). Dans tous les cas, eStarter est rapidement atténuée si la richesse en P du sol augmente, vraisemblablement du fait d'une perte de réceptivité des mécanismes de transport des phosphates vers le cytoplasme des racines. En situations de P abondant, ces transporteurs sont moins à l'affût de P, y compris via l'apport d'engrais P.

Une telle diminution d'eStarter, un véritable problème en agronomie, s'applique aussi aux engrais complémentaires. Peu documentée (CDA Dordogne 2012, 2013) - l'essentiel de la base de la connaissance concernant surtout l'efficacité des engrais P à titre de fumure de fonds (COMIFER 2007), cette efficacité relative des engrais P(K) complémentaires est elle aussi parfois déficiente.

### La biofertilisation P et conservation de la matière organique des sols arables

Il existe une impressionnante base de connaissance concernant l'utilisation de microorganismes, bactériens et fongiques, destinés à accroître la biodisponibilité immédiate du P en sols arables, soit par dissolution de composés P calco - magnésiques (apatite ; eg. Rodriguez et al. 2006), soit par minéralisation accélérée via l'attaque enzymatique de composés P organiques (phytates, acides nucléiques, etc. ; Idriss et al. 2002 ; Naz et al. 2013 ; Doolette et al. 2010). Or, ces deux solutions causent problème. D'une part la dissolution des apatites ne perdure pas. La diffusion du P sous forme de phosphates étant plus lente que celles des cations Ca et Mg avec lesquels il réagit. Il en résulte une *rétrogradation apatitique* faisant que les engrais phosphatés incorporés au sol s'immobilisent rapidement sur des distances de l'ordre du mm. Le problème de la nutrition en P des cultures a donc longtemps été lié à celui de la *mobilisation* de ces réserves minérales de P.

D'autre part, les sols arables concentrent les dérivés immédiats de l'acide phytique sous forme de phytates pourtant relativement peu présents dans les RCS cellulosiques. Notons que l'acide phytique ou acide myo-inositol hexa-phosphorique est naturellement présente dans les graines de nombreuses céréales et légumineuses. Cependant, les matières organiques d'origine végétales sont elles généralement plutôt riches en acides nucléiques et phospholipides, l'acide phytique ne représentant ~10% de leurs composés P ; les phytates en sols arables peuvent eux représenter plus de 50% du P organique. Il y a donc un phénomène de concentration par accumulation préférentielle du phytate dans les sols. L'attaque enzymatique (phytases) de cette matière organique du sol relativement riche en phytate via l'inoculation des RCS avec des microorganismes indigènes ou (ré)introduits afin d'en libérer du P est donc recherchée en agronomie, mais devrait pourtant être évitée. En effet, la dégradation, quantitative et qualitative, de la matière organique du sol résulte de telles attaques par la flore microbienne du sol, notamment en présence d'ions NH4+ provenant d'engrais ammoniacaux (Mulvaney et al. 2009). De même, lors d'apports prolongés, sur plusieurs années voire décennies, d'engrais P à titre de fumure de fond ce sont surtout les fractions les plus labiles qui s'accumulent (Negassa et Leinweber 2009) au dépends de la matière organique phosphatée plus stable.

En effet, en apportant de simples engrais minéraux riches en ammonium et/ou en P, l'activation de la vie microbienne du sol qui résulte est bien souvent synonyme de dégradation de la matière organique du sol, phénomène contraire à conservation des sols recherchée en agronomie. Or, et bien que est peu efficace - voire nuisible pour la conservation des sols, il existe des produits supposément biofertilisants préconisant que La matière organique du sol doit être ainsi "attaquée" à titre de source d'éléments nutritifs, N et/ou P, pour la culture. Dommage.

Sigles et définitions

**Pr** : P transférable (échangeable) entre le sol et la solution du sol (mg-P / kg-sol ; Morel 2002)

**Cp** : teneur de la solution du sol en P pour un Pr donnée (mg-P / L ; Morel 2002)

**STP :** teneur en P du sol (mg-P / kg-sol, ou encore kg-P / hectare) selon une quelconque méthode d'extraction du P échangeable (angl. *soil test phosphorus* ; Bermudez et Mallarino 2002, 2004).

**TSP** : taux de saturation en P du sol (% P / [0,5 x (Al + Fe)] ; MAPAQ 2003, Renneson et al. 2008)

**PTS** : pouvoir tampon du sol à l'égards du P ([(mg-P / kg-sol) / (mg-P / L)] ; Morel 2002)

**OMIC** : proportion du Pr immobilisé par la microflore de la résidusphère sans inoculation bactérienne ; cette valeur est bornée selon l'importance de Pr (cf. Tableau 1)

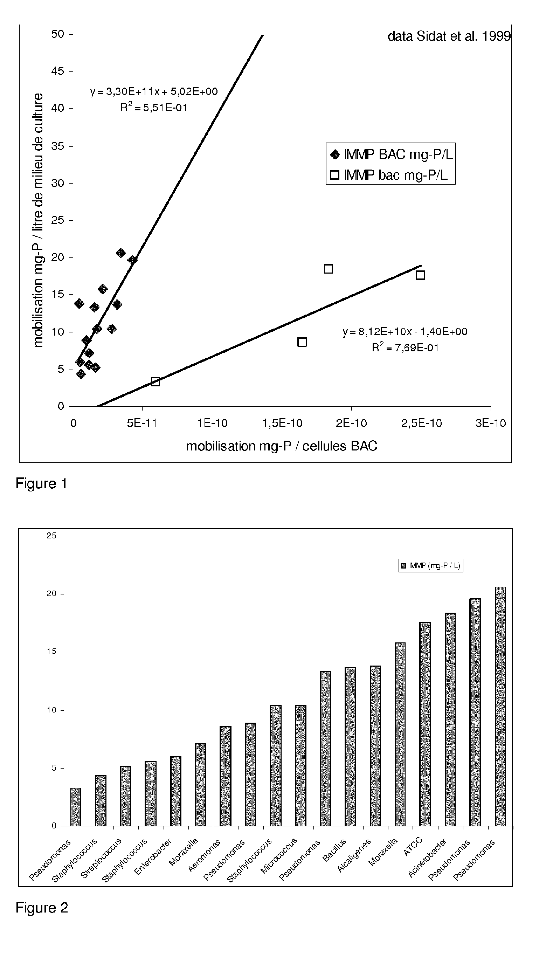

$\Delta$**bac** : proportion du Pr immobilisé par la microflore de la résidusphère attribuable à son inoculation bactérienne à l'aide de bactéries sans pouvoirs IMMP particuliers (infra, Figures 2 et 3)

$\Delta$**BAC** : proportion du Pr immobilisé par la microflore de la résidusphère attribuable à son inoculation bactérienne à l'aide de bactéries avec pouvoir IMMP de 2 à 5 fois plus élevés que bac (infra, et Figures 2 et 3)

$\Delta$**IMMP** : le cas échéant, la somme de $\Delta$MIC et, selon le cas, $\Delta$bac ou $\Delta$BAC

**RCS :** RCS cellulosique, avantageusement pailleux, au sol

**IMMP :** immobilisation microbienne du P tellurique

**IMMPc3** : immobilisation microbienne du P du sol. Celle-ci peut être attribuable à MIC, bac ou BAC.

**IMMP$_{MIC}$** : immobilisation microbienne du P du sol attribuable qu'à la flore microbienne de la résidusphère sans inoculation bactérienne

**IMMP$_{bac}$** : immobilisation microbienne du P du sol attribuable qu'à la flore microbienne de la résidusphère sans inoculation bactérienne bac sans pouvoirs IMMP particuliers (Figures 2 et 3)

**IMMP$_{BAC}$** : immobilisation microbienne du P du sol attribuable qu'à la flore microbienne de la résidusphère sans inoculation bactérienne avec pouvoirs IMMP particuliers (infra, et Figures 2 et 3)

**MIC-IMMP** : microflore de la résidusphère immobilisatrice de P tellurique

**bac-IMMP** : bactéries sans pouvoirs IMMP particuliers apportées microflore de la résidusphère

**BAC-IMMP** : bactéries avec pouvoirs IMMP particuliers apportées à la microflore de la résidusphère

**Délai métabolique** (angl. *turnover rate*) : le temps écoulé entre le moment de l'immobilisation microbienne in situ du P et le relargage de ce même P dans l'environnement tellurique (généralement en jours). Ce délai est souvent apprécié à l'aide d'engrais ou biomasses marqués au $^{32}$P ou [33]P.

**MRPS** (modèle résidu- / pédo-sphérique) : mise en oeuvre mathématique d'une *compartimentalisation* bipartite du sol entre la résidusphère composé de RCS en cour de dégradation, et la pédosphère qui lui est immédiatement adossée. Située à quelque mm de la résidusphère, cette pédosphère est néanmoins peu ou pas affectée par la diffusion des substrats carbonés provenant de la dégradation in situ des RCS.

**DICP** (diffusion inter - compartimental du P, modèle de ... ) : calcul par modélisation dynamique des cinétiques de transfert du P entre les compartiments pédo- et résidu-sphériques applicable au MRPS.

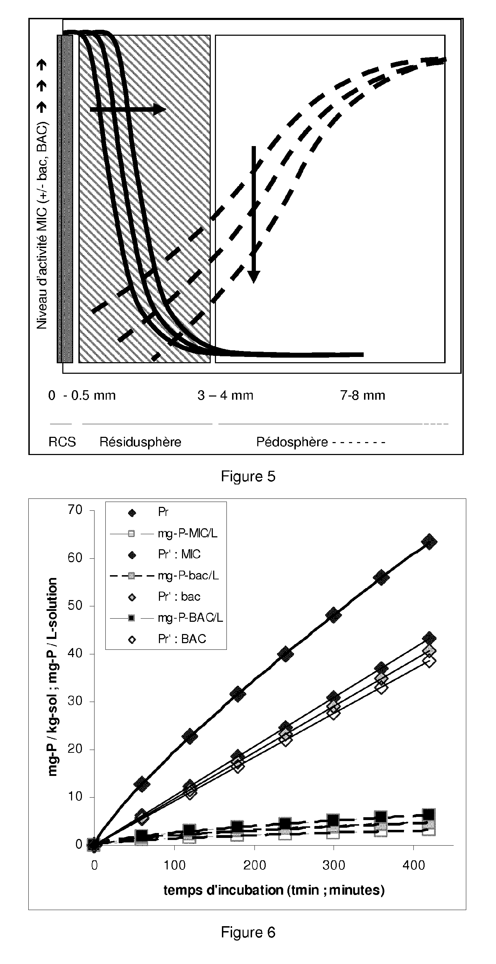

**eStarter** : efficacité relative des engrais P dits "starter" par rapport à un témoins sans de tels engrais P (cf. Figure 3 et 5). L'eStarter et aussi applicable aux engrais complémentaires.

**Interculture :** Pour les cultures de printemps (eg. maïs), la période entre la récolte de la culture précédente et ses RCS et le semis de la culture suivante, dite ici *interculture-1,* d'une durée d'entre 6 et 8 mois. Pour les cultures dites d'hiver, la période dite ici *interculture-2* entre la récolte de la susdite culture précédente et ses RCS et le premier apport d'engrais N, généralement en sortie d'hiver (zone tempérées / hémisphère nord)

**Engrais (N, P) starter :** engrais, contenant du P, localisé en proximité des semences dans la raie de semis de manière à éviter une trop grande rétrogradation apatitique des ions phosphaté ainsi libérés - L'engrais P starter peut être organique, ou organominéral, voire contenir des microorganismes capables de dissoudre l'apatite et/ou produire des phytases et/ou phosphatases.

**Engrais (P, K) complémentaires :** engrais, contenant généralement du P, voire du K, apportés à la volée en sortie d'hiver en complément du premier apport d'azote (N1). Idem à l'engrais starter NP, il peut être organique ou organominéral, contenir des microorganismes, etc.

*Rétrogradation apatitique* : phénomène pédologique faisant que les engrais phosphatés incorporés au sol, même s'ils sont solubles, s'immobilisent rapidement sur de très faibles distances de l'ordre du mm.

## DIVULGATION DE L'INVENTION

### *Problème technique*

Le problème technique réside dans l'inefficacité relative d'engrais P starter localisés au semis de culture de printemps et/ou d'engrais complémentaires appliqués en sortie d'hiver sur cultures d'hiver lorsque la teneur en le degré de saturation en P des sols est appréciable. L'inefficacité pondérale de ces engrais P étant faible du fait de réactions chimiques avec le sol, ils tendent à s'accumuler dans les sols. Or, contrairement au cas de l'azote du sol, cette fixation est plus irréversible que l'immobilisation microbienne du P. Pourtant comme pour l'N, l'essentiel des apports d'engrais P aux sols sont néanmoins pondéreux, d'où la saturation éventuelle en P de ces sols. Pire, les engrais P "starter", a priori les plus efficaces, voient ainsi leurs efficacités décroître sans que cette relative saturation en P des sols arables puisse en elle même procurer à la culture un tel coup "coup de fouet" au démarrage.

Il faut donc redonner aux engrais P starter et/ou complémentaires l'opportunité d'agir malgré une certaine richesse et/ou saturation en P des sols. Il ne faut pas pour autant recourir à l'attaque enzymatique de la matière organique phosphatée (Po) du sol, ou encore prôner une minéralisation accélérée de l'acide phytique des RCS qui provoquera à terme un appauvrissement des fractions les plus stables, et structurantes, de la matière organique du sol.

### *Solution technique*

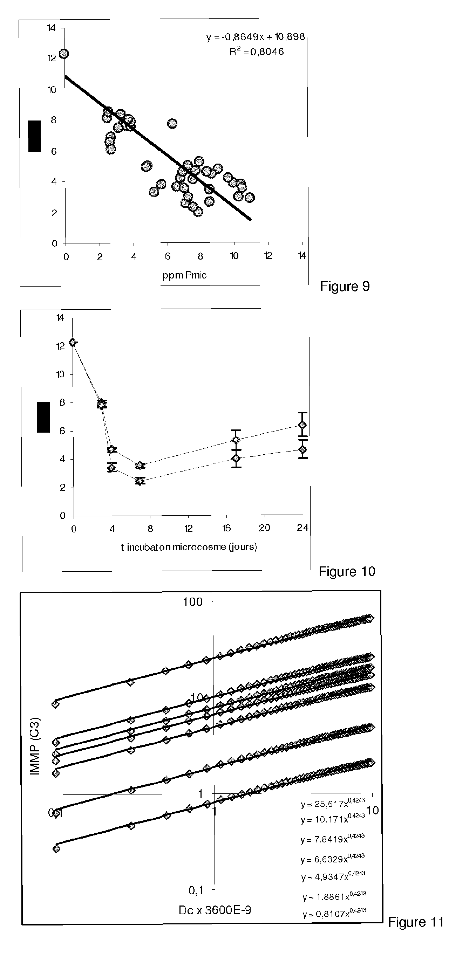

La solution technique consiste à *sur - immobiliser,* par inoculation des RCS avec des biomasses bactériennes, dites BAC, dotées d'un pouvoir d'immobilisation du P (IMMP) particulièrement important. Une partie importante du Pi normalement transféré vers la solution du sol sera ainsi transitoirement *sur - immobilisée* par les BAC dans la résidusphère contribuant ainsi à augmenter l'eStarter. Ce P microbien n'étant que transitoirement immobilisé sera plus rapidement remis en solution par minéralisation que ne l'est le P minéral complexé sous formes calco - magnésiques et/ou alumino - ferriques beaucoup plus stables. Les quantités de P microbien (immobilisé) nécessaires au fonctionnement de l'invention sont somme toute assez faibles, de l'ordre de quelques kg par hectare, et cela du fait de la relation fortement non - linéaire entre l'eStarter et les niveaux de STP, TPS et PTS (Figures 4 et 5). De plus, cette sur - immobilisation transitoire perdure suffisamment (Figure 9) pour agir sur l'efficacité des susdits engrais P. Une fois relarguer, ce P transitoirement immobilisé va retourner au sol et participer normalement à l'alimentation des racines. En effet, les délais métabolique (*turnover*) selon Achat et al. 2010a/2010b et Chen et He 2002 sont en ce sens suffisamment longs, soit de l'ordre de 80 à plu sde 200 jours.

Cette solution diffère de l'état de l'art en proposant non pas de libérer le P du sol afin de rendre *immédiatement* plus phytodisponible le P, mais plutôt de le sur - immobiliser *transitoirement* entant que P microbien. Cette (sur)immobilisation du P à l'aide de BAC ($IMMP_{BAC}$) plutôt qu'à l'aide de bac ($IMMP_{bac}$) amplifiera ce phénomène d'IMMP au profit d'une plus grande eStarter.

Concrètement, il s'agit d'un procédé de fertilisation en P de cultures agronomiques comportant l'application d'engrais P starter et/ou complémentaires à la culture suivante, cela en présence des RCS (RCS) générés par la culture précédente préalablement bactérisés et enfouis au début de l'interculture. Ce procédé est ici caractérisé en ce que les biomasses bactériennes servant à la bactérisation des RCS sont particulièrement phospho - immobilisatrices *et* ne produisent pas *nécessairement* de phosphatases, de phytases, d'acides organiques et/ou toutes autres molécules capables de minéraliser, solubiliser et/ou rendre immédiatement plus biodisponible le P, organique ou inorganique, du sol et/ou des RCS.

Les engrais P starter sont apportés à la fin de l'interculture-1, au semis en proximité des semences, tandis que les engrais complémentaires sont apportés à la fin de l'interculture-2, avantageusement à la volée, une fois la culture suivante déjà établie. Notons que par interculture-1 nous désignons l'interculture comprenant la période entre la récolte de la culture précédente générant les RCS et le semis de la culture suivante. Pareillement, par interculture-2 nous désignons l'interculture comprenant la période entre la récolte de la susdite culture précédente générant les RCS et la date du premier apport d'engrais N (N1) à la culture suivante déjà établie.

La culture suivante fertilisée à l'aide d'engrais P starter à la fin de l"interculture-1 est une culture de printemps telle que le maïs, tandis que la culture suivante fertilisée à l'aide d'engrais P complémentaires à la fin de l'interculture-2 est une culture d'hiver telle que le blé. Plus particulièrement, et dans le cas des cultures dites ici de printemps recevant des engrais P starter, l'interculture-1 est d'une durée de 3 à 9 mois, plus particulièrement en zone tempérées de l'hémisphère nord de septembre à mai, et avantageusement ainsi d'octobre à avril. Pareillement, et dans le cas des cultures dites ici d'hiver recevant des engrais complémentaires, l'interculture-2 est d'une durée de 3 à 8 mois, plus particulièrement en zone tempérées de l'hémisphère nord de septembre à février, et avantageusement ainsi d'octobre à janvier.

Notons que dans le cas engrais P organominéraux, ceux-ci peuvent néanmoins contenir des bactéries produisant des phosphatases, phytases, acides organiques et/ou toutes autres molécules capables de minéraliser, solubiliser et/ou rendre immédiatement plus biodisponible le P, organique ou inorganique, du sol et/ou des RCS.

L'application in situ des bactéries sur RCS de la culture précédente ce fait par pulvérisation liquide avant leur enfouissement (eg. Claude et Fillion 2004), tandis que les engrais P starter, liquides, solides, organiques, organominéraux et/ou bactérisés sont localisé en bandes en proximité des semences au moment du semis de la culture suivante. Ces biomasses microbiennes, avantageusement bactériennes, peuvent elles provenir de milieux naturels (eg. Zhao et al. 2013), de réacteurs et/ou d'usines d'épuration d'eaux usées (eg. Sidat et al. 1999), voire de sols arables bien que la base de connaissance est particulièrement défaillante en ce sens. Par exemple, et à titre d'exemple je propose, selon la Figure 2, de telles bactéries, dites "BAC" par opposition à de simple "bac" moins performantes, au moins deux à trois fois supérieurs en ce sens aux bac les moins performantes capables tout au plus d'IMMP de 3,0 mg-P / L sur 7 heures d'incubation (data Sidat et al. 1999) ou encore de 8E10 (mg-P / L) / (mg-P / cellule bac) (Figure 1). Notons qu'il est avantageux que le temps d'incubation coïncide avec celui utilisé pour l'obtention d'une certaine valeurs Pr pour les types de sols arables ciblés ; ces durées d'échange lors du transfert des ions P du sols vers la solution du sol au sens de Morel 2002 servirent à l'obtention des coefficients v, w et p (supra). Il sera éventuellement aussi possible d'obtenir les valeurs v, w et p au sens de Morel 2002. Pour ce faire, une régression linéaire à variable multiple (RLVM) comprenant le % d'argile, le pH, la teneur du sol en $C_{organique}$, son CEC et les teneurs en Al et Fe permettant de calculer TSP pourrait être utilisée. Pour I. Nous pourrons ainsi calculer les valeurs paramétriques v, w et p afin d'obtenir Pr et PT ; les valeurs au Tableau 2 pourraient servir en ce sens, bien qu'à ce stade trop peu nombreuses pour obtenir une RLVM significative.

Le caractère phospho-immobilisatrices de ces biomasses bactériennes est préalablement évalués in vitro en milieux de culture au cours d'une période d'incubation, les biomasses les plus phospho-immobilisatrices étant celles le plus capables de réduire la concentration initiale en P biodisponible dudit milieu de culture par rapport à des biomasses bactériennes de références qui le sont moins. Plus particulièrement, notons que les biomasses bactériennes en milieu de culture les moins capables de phospho-immobilisation immobilisent aussi peu que 3 mg-P/L de milieu de culture, et celles les plus capables de phospho-immobilisation plus de 20 mg-P/L, soit plus de 5 à 7 fois plus que ces biomasses microbienne témoins de références les moins performantes en ce sens.

La culture précédente est une culture céréalière et/ou d'hiver produisant des RCS cellulosiques, et en ce que la culture suivante est une culture de printemps pouvant bénéficier d'engrais P starter. Ce caractère bénéfique de l'engrais P est fonction de la teneur en P du sol exprimée sur la base de la teneur initiale en P du sol (STP ; mg-P/kg-sol), le pouvoir tampon du sol à l'égards du P (PTS ; [mg-P/kg-sol]/[mgP/L de solution du sol]) ou encore le taux de saturation en P du sol (TSP ; $P_{échangeable}/([0,5 \cdot [Al]+[Fe])$). L'efficacité relative escomptée de telles applications étant moindre si ces valeurs de STP, PTS et TSP sont trop importantes. Plus particulièrement, les valeurs de STP au sens de $P_{Olsen}$ ou de Pr (mg-P/kg-sol) sont inférieures à 100, de PTS ([mg-P/kg-sol]/[mgP/L de solution du sol]) inférieures à 100, et de TSP inférieures à 100% au sens de ($P_{échangeable}/([0,5 \cdot [Al]+[Fe])$).

### *Avantages apportés et activité inventive*

L'invention évite le traitement des semences à l'aide de bactéries capables de solubiliser ou de minéraliser les fractions plus ou moins récalcitrantes du P tellurique. L'invention permet le remplacement des exportations de P de la parcelle à l'aide d'engrais P starter et/ou complémentaires particulièrement efficaces malgré des taux élevés de saturation en P, et cela sans attaquer directement les réserves, organiques notamment, du sol. En effet, bon nombre de produits supposément biofertilisants appliqués au sol et/ou au semences cherches à attaquer et dégrader la matière organique de manière à en libérer l'N et de P quelle contient ; cette pratique est contraire à la conservation des sols qui doit plutôt l'accumuler et/ou la protéger.

**BRÈVE DESCRIPTION DES DESSINS ET FIGURES**

**Figure 1 :**  Diversité du pouvoir d'immobilisation de bactéries (Sidat et al. 1999). Deux groupes de bactéries plus (IMMP$_{BAC}$) ou moins (IMMP$_{bac}$) capables de recouvrir le P en solution d'un milieu de culture par rapport leurs teneur en P par unité cellulaire. Il va de soi que les cellules les plus performantes en ce sens sont plus petites, et affichent des délais de génération plus courts.

**Figure 2 :**  Diversité du pouvoir d'immobilisation de bactéries (Sidat et al. 1999). En termes d'immobilisation du P en solution, ces différentes espèces de souches bactériennes diffèrent par un facteur allant jusqu'à plus de cinq ; cela dénote un fort potentiel d'amélioration du pouvoir d'IMMP par sélection des BAC les plus performantes par opposition aux bac qui le sont moins.

**Figure 3 :**  Biomasse de plants de maïs au stade de la 7$^{ième}$ feuille suite à attribuable à un engrais P starter (eStarter ; données MAPAQ 2003). Cette relation est non-linéaire, et qu'à faibles taux saturation en P, l'efficacité relative des engrais P starter va augmenter rapidement ; cela expliquera la progression de l'efficacité de la sur - immobilisation de P attribuable à BAC (Figure 6).

**Figure 4 :**  Efficacité relative d'engrais P starter (eStarter ; % d'augmentation de la matière sèche des parties aériennes) de plantules de maïs au stade de là la 7$^{ième}$ feuille par rapport à un témoin sans engrais P starter selon la teneur en P du sol (méthode Olsen ; données de Bermudez et al. 2002 et 2004). Notons que cette efficacité n'est pas appréciable sur les rendements (RDT), ce qui est habituel avec ce type d'engrais P starter.

**Figure 5 :**  Schéma d'un modèle bipartite résidu- / pédo-sphère (MRPS) basé sur le dispositif et les données de Gaillards et al. 1999/2002, Bhadoria et al. 1991 et Kaselowsky et al. 1990. MRPS simule l'incubation de RCS adossés à 3 ou 4 mm de sol plus ou moins distaux par rapport aux RCS (i.e. la *résidusphère ;* aire hachurée), et d'un compartiment *pédosphérique* plus distal par rapport au RCS (0,0 à 0,5 mm). La flèche descendante indique la transformation des dynamiques d'immobilisation du P (IMMP) à travers la pédosphère en réponse à une augmentation du niveau d'activité (flèche transversale) de la microflore dans la résidusphère (MIC) amplifiée par bac, voire - dans le cas de la présente invention, BAC.

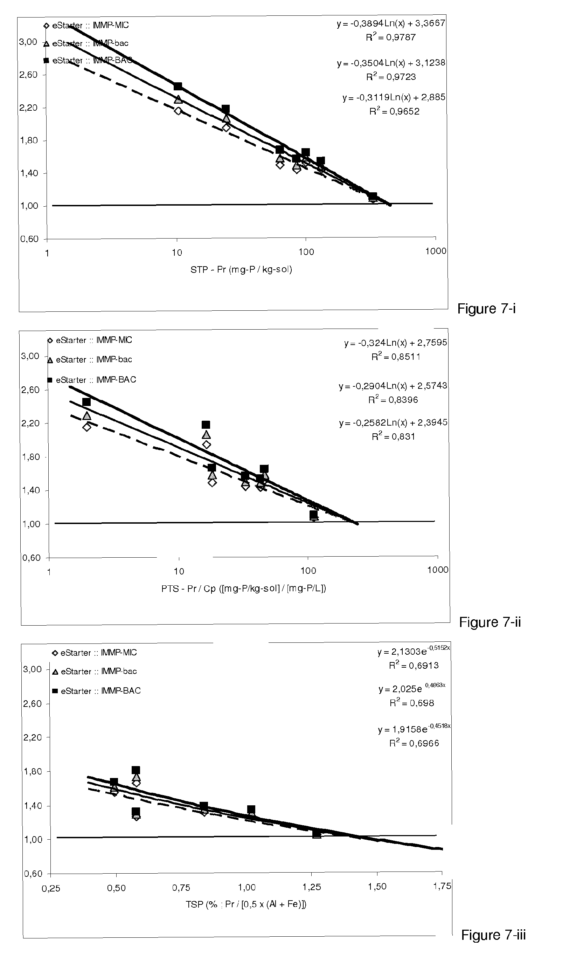

**Figure 6 :**  Modélisation de la cinétique de d'immobilisation du P (IMMP) sur 420 minutes par MIC, bac ou BAC provoquant une baisse appréciable de Pr. Plus l'IMMP de Pr par MIC, bac et BAC sont importantes, plus le Pr' résultant est abaissé, d'où l'effet recherché sur STP et/ou TSP capable d'améliorer l'eStarter (Figure 7). Le Pr initial après 420 minutes d'incubation sans MIC, bac ou BAC est ici à titre d'exemple de 63,55 mg-P/sol (cf. sol no 5 ; Tableaux 2, 4, 5 et 6).

**Figure 7 :**  Modélisation de l'efficacité par rapport à un témoin sans RCS pailleux au sol (RCS) d'eStarter attribuable à l'immobilisation de P (IMMP) provoquée par des RCS non bactérisés (IMMP$_{MIC}$), bactérisés avec des bactéries quelconques non expressément immobilisatrices de P (IMMP$_{bac}$), et des bactéries qui elle le sont (IMMP$_{BAC}$). Trois types de relations sont présentés ; i) par rapport au Pr initial du sol (STP), ii) par rapport à pouvoir tampon du sol à l'égard de P (PTS ; Morel 2002), et iii) par rapport au taux de saturation en P du sol (TSP ; MAPAQ 2003, Renneson et al. 2008).

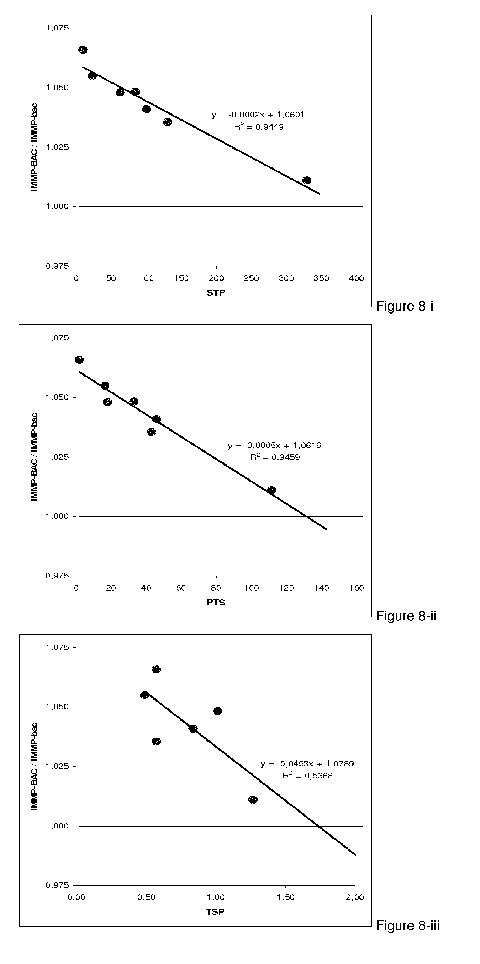

**Figure 8 :**  Ratios des IMMP$_{BAC}$ et IMMP*bac* (cf. Figure 7). Cet effet de BAC par rapport à bac sera de moins en moins prononcée selon l'augmentation de la richesse et/ou du degré de saturation en P du sol. Figure 8-i selon la richesse du sol (STP ; mg-Pr / kg-sol), Figure 8-ii selon le pouvoir tampon du sol (PTS ; (mg-Pr/kg-sol) / (mg-P/L)), et Figure 8-iii selon le taux de saturation en P du sol (TSP ; Pr / [0,5 x (Al + Fe)]).

**Figure 9 :**  Données de Cole et al. 1978 illustrant la corrélation entre Pi (mg-P / kg-sol, ou ppm) et les ppm de P immobilisé par la microflore du sol y compris de bactéries réintroduites dans les microcosmes de 20 g à température ambiante ; l'immobilisation microbienne du P à hauteur d'une douzaine de ppm est bel et bien responsable d'une diminution, transitoire, du Pi phytodisponible. Notons que cette immobilisation microbienne est commensurable avec la vingtaine (20,38) de ppm Tableau 3.

**Figure 10 :**  Données de Oehl et al. 2001/2004 illustrant l'immobilisation → mobilisation du Pi par les susdites flores microbiennes du sol avec (courbe inférieure) et sans amendement glucosés (200 ppm sur 6 jours) ; l'intervalle comprise entre les deux courbes représente environs 2 mg-P / kg-sol, soit une quantité de P ainsi "sur - immobilisé" encore une fois parfaitement commensurable avec les 2 (2,49) à 4 (4,56) ppm de P proposés au Tableau 3. Par extrapolation on anticipe que le niveau de ppm Pi initial ne sera rétablit qu'après 125 à 150 jours au mieux, soit en parfait accord avec les délais métabolique (ang. *turnover rate)* pour le Pi immobilisé par la microflore tellurique (Achat et al. 2010a/2010b, Chen et He 2002).

**Figure 11 :**  Représentation graphique pour chacun des sept (7) sols retenus (Tableaux 2 et 3 bis) (a) de la progression d'IMMPc3, i.e. la quantité de P "sur - immobilisé" par les biomasses azotobactériennes inoculées sur les RCS par rapport à l'hypothétique augmentation de Dc, soit ici de 1 à 10 fois 3600 x 10$^{-9}$ cm$^2$/heure.

Inversement, on voit bien ici que ces sur - immobilisations de P de l'ordre de 0,30 à 4 kg-P/kg-sol peuvent être parfaitement réalisées via une certaine augmentation, fort modeste, de Dc par un facteur d'au plus 50%. Les cinétiques de diffusion du P de la résidusphère vers la surface des RCS ne sont donc pas limitatives pour la réalisation de la présente invention. Nb. Échelles IMMPc3 et Dc logarithmiques.

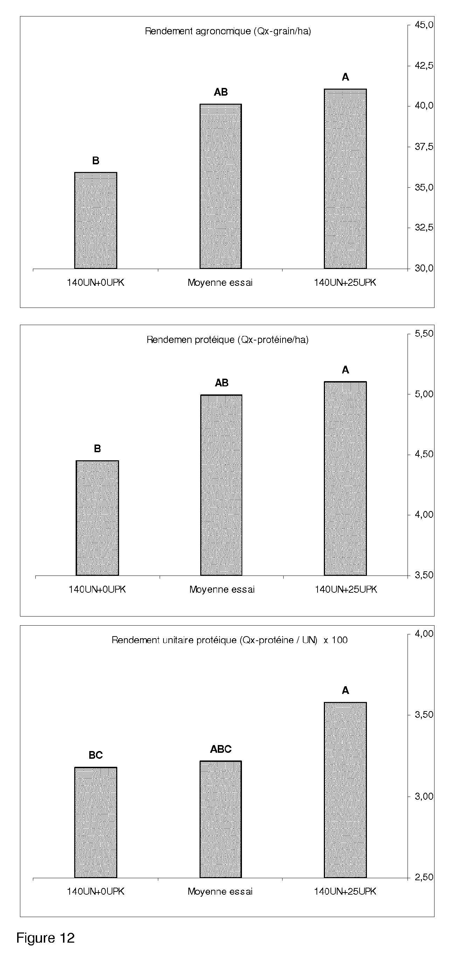

**Figure 12 :** Efficacité d'un engrais PK complémentaires (25 UPK ; 25 kg-$P_2O_5$ et 25 kg-$K_2O$ par hectare) apporté en sortie d'hiver sur une culture de blé et combinés au premier apport d'azote, N1, de 60 unités d'azote (UN ; kg-N/ha + N2 = 140). Par rapport à la moyenne de l'essai comportant de modalités avec jusqu'à 180UN et 50UPK, et par rapport à la modalité directement comparable (140UN) mais sans les 25UPK, l'engrais complémentaire 25UPK en présence de RCS azotobactérisés avec des bactéries bac sans pouvoir phospho - immobilisant particulier (IMMP$_{bac}$ ; données Agronutrition 2014) augmente les rendements agronomiques, protéiques et unitaires. Le pouvoir phospho - immobilisant des bactéries BAC (IMMP$_{BAC}$) étant nécessairement supérieur, l'efficacité de tels engrais PK complémentaires sera d'autant plus appréciables. A suivre.

## MODE DE RÉALISATION PRÉFÉRÉ DE L'INVENTION

La faisabilité de la réalisation de l'invention est doublement démontrable à l'aide de deux modèles ;

    **a) MRSP :** Modélisation résidu- / pédo-sphérique du P (cf. Morel et al. 2002, 2004, 2011)
    **b) DICP :** Diffusion inter - compartemental du P (cf. Bhadoria et al. 1991)

MRSP démontre que les quantités de Pi sur - immobilisé sont commensurables avec les quantités de P immobilisées suite à l'apport d'amendements organiques. DICP lui démontre que ces modestes sur - immobilisations de P ne nécessitent pas des augmentations très importantes des coefficients de diffusions (Dc) du P, ces valeurs de Dc étant in fine elles aussi commensurables avec les valeurs habituelles. Des données sur les délais métaboliques de re-largage du P seront fournies de manière à démontrer que l'effet iRPo peut effectivement perdurer pendant les 4 à 6 mois de l'interculture blé => maïs, soit en France d'octobre à fin avril.

### A. MRSP et l'effet de cette sur - immobilisation de P sur eStarter

*Pr par rapport à P$_{MIC}$ par rapport à la mobilisation du P par la culture (MOBP).* Pr (mg-P/kg-sol) est pondéralement comparable à PMIC et, avantageusement MOBP. La fertilisation P devant remplacer ces exportations de P (MOBP) est donc du même ordre de grandeur que PMIC. C'est en ce sens que PMIC est un puit, puis une source, de P pour la culture. Le but de la présente invention est d'optimiser la contribution de ce puit / source à l'alimentation de la culture.

*IMMP$_{MIC}$ et le ratio IMMP$_{BAC}$ / IMMP$_{bac}$.* L'immobilisation microbienne du P (IMMPc3) attribuable à l'enfouissement des RCS est de l'ordre de 5 à 10% de Pr selon l'importance de Pr (Tableau 1). Cette valeur d'IMMP$_{MIC}$ est basée sur les données de Frossard et al. 2011 (figure 2 et pages 68-69 cf. Bunemann et al. (eds) 2011) ainsi que celles d'Oehl et al. 2001. Par exemple, sur une période de 21 jours post enfouissement des RCS, un taux d'immobilisation de 0,3 à 0,4 mg-P/kg-sol/jour équivaut facilement à 5 à 7 mg-IMMP/kg-sol. Le ratio IMMP$_{BAC}$/IMMP$_{bac}$ lui est ici de deux, soit, par rapport à IMMPMIC attribuable aux simples RCS pailleux au sol enfouis sans inoculation, plus de 2,5 et 5,0%, respectivement (Tableau 1). De plus, ces pouvoirs immobilisateurs de P sont plausibles et conservateurs compte tenu, i) du dynamisme des bactéries résidusphériques révélé par l'effet agronomiques de Solactiv™-P (alias BPÎA™ ; Figure 1), i.e. à l'aide de bactéries sans IMMP particulier, et ii) du très fort potentiel d'amélioration d'IMMP révélé par les données de Sidat et al. 1999 aux Figures 2 et 3.

**TABLEAU 1 :** Immobilisation microbien du P tellurique (IMMP) en % de Pr (mg-Pr / kg-sol ; Morel 2002). Les valeurs $\Delta$MIC, $\Delta$bac et $\Delta$BAC proposées sont bornées selon le taux initial de Pr, le pouvoir immobilisateur des microorganismes du sol étant limité par leur capacité physiologiques et non strictement par la nature pédologique de leur environnement.

| | % de Pr | | |
|---|---|---|---|
| mg-Pr / kg-sol | $\Delta$MIC : IMMP$_{MIC}$ | $\Delta$bac : IMMP$_{bac}$ | $\Delta$BAC : IMMP$_{BAC}$ |
| 5 à 25 | 12,5 | 2,5 | 5 |
| 25 à 40 | 10 | 2,5 | 5 |
| 40 à 60 | 7,5 | 2,5 | 5 |
| plus de 60 ... | 5 | 2,5 | 5 |

Distinguons entre IMMP$_{BAC}$ et IMMP$_{bac}$, la dernière étant moins importante. Je propose ici un ratio du simple au double, soit de 2,5% à 5,0% d'IMMP en plus par rapport a IMMP$_{MIC}$ estimée elle à 5 à 12,5 % selon la valeur initiale de Pr (Tableau 1). Cette supériorité de BAC par rapport à bac et donc très conservatrice compte tenue d'une grande variabilité dans le taux d'IMMP observé chez différents isolats bactériens (Sidat et al. 1999, Bond et al. 1999, etc.) ; cette très grande variation sans les taux d'IMMP bactériens à semble-t-il un fondement biomoléculaire (cf. Bond et al. 1999).

C'est cette variation qui est valorisable lors de la sélection des souches bactériennes pour la production des inocula BAC.

*L'efficacité d'IMMP selon STP, PTS et TSP.* La capacité de l'IMMP telle qu'affectée par les RCS (IMMP$_{MIC}$) avec ou sans bac et BAC à augmenter l'eStarter est rapportée (Figure 7) soit par rapport aux Pr initiaux (STP), au pouvoir tampon du sol (PTS) selon Morel 2002, et au taux de saturation en P du sol (TSP) selon Rennessamn et al. 2002 et MAPAQ 2003). On peut aussi rapporter cette capacité d'IMMP selon les caractéristiques du sol telles que le pH ou la teneur en argile. Comme nous le verrons à la Figure 8, l'efficacité relative des BAC les plus capables d'IMMP par rapport aux bac qui le sont moins va décroître avec l'augmentation de STP, PTS et/ou TSP. L'invention sert donc à augmenter l'eStarter, voire celle des engrais PK complé-mentaires, sans pour autant réduire durablement la richesse en P du sol.

MRPS est schématisée à la Figure 5 ; il s'appuie sur le mode opératoire de Gaillards et al. 1999, 2002 et comprend deux phénomènes ;

- IMMP$_{MIC, bac, BAC}$ par la microflore du sol normalement associée à la résidusphère, y compris lorsque renforcée par bac ou BAC ;
- la fixation par les particules de SOL au sens de Morel 2002 permettant néanmoins un *transfère* de ce P pédosphérique vers les racines, ou du moins la solution du sol.

Dans ce modèle MRPS chacune des parties ne fait que 4 à 5 mm d'épaisseur. Le MRPS est amorcé au temps zéro (to) et piloter pendant une période de 7 heures (420 minutes ; Figure 6) ; la teneur initiale de P en solution est égale à celle du Pr du sol modélisé. A la fin de la période d'incubation l'essentiel de ce P en solution sera transféré vers la pédosphère, moins une certaine portion immobilisée par BAC dans la résidusphère ; le Pr résultant en présence de MIC, bac ou BAC sera donc nécessairement moins que le Pr témoin. On peut donc poser que ;

$$Pr(t_{min} ; IMMP) = a \cdot t_{min} + b \cdot IMMP + constate \Rightarrow Pr' (ajusté) = a \cdot t_{min}$$

ou a, b et la constante sont les paramètre d'un modèle de régression linéaire à variables multiples (deux). Le coefficient de la progression de Pr' à travers le temps étant lui définit comme suite ;

$$Pr - b \cdot IMMP \approx a \cdot t_{min} \Rightarrow Pr' (ajusté)$$

La différence entre Pr et [b · IMMP], i.e. la quantité de P immobilisé par MIC, et bac ou BAC, est approximativement égale à [a · tmin], la constante étant quasi nulle.

Les immobilisations du P, (i) microbienne et bactérienne dans la résidusphère et (2) par fixation dans la pédosphère (Pr ; Morel 2002) sont simultanés et voisins (Figure 5) contenant initialement une quantité de Pi soluble équivalent à Pr. La cinétique d'IMMP dans la pédosphère sera ainsi nécessairement affectée par celle dans la résidusphère ; plus IMMP$_{MIC}$, IMMP$_{bac}$ et IMMP$_{BAC}$ seront importantes, plus la cinétique d'IMMP dans son ensemble sera rapide et la valeur finale de Cp faible. Le temps d'incubation (t$_{minutes}$ ; Figure 6) du MRPS est ici de 420 min (7 heures), soit le même que celui proposé par Sidat et al. 1999 lors du criblage des isolats bactériens selon leurs taux d'IMMP en solution (mg-P / L). D'autres temps d'incubation peuvent être utilisés dans la mesure où les extrapolations a'al Figure 6 demeurent essentiellement quasi linéaires.

Le transfert du P (Pr) entre la solution du sol et les sites de fixation du P est en relation avec l'immobilisation microbienne de ce même P a priori en solution par la flore microbienne de la résidusphère enrichie ou non de bac ou BAC (Figure 6). Cette immobilisation microbienne du P (IMMP) est cependant bornée par la valeur Pr en proportions variables selon l'importance de Pr (Tableau 1). Les deux phénomènes, de transfert pédologique (Pr) et d'immobilisation microbienne (IMMP), du P ont donc lieu simultanément et conjointement (Figures 6). En effet, Gaillards et al. 1999 et 2002 observèrent que l'essentiel des substrats carbonés provenant de la dégradation des RCS s'accumulent dans le premier compartiment à moins de 4 mm ; au delà, la dégradation des RCS n'affecte pas directement la chimie du sol. Il existe donc entre la résidusphère et la pédosphère qui l'adosse une sorte de paroi semi - osmotique permettant le passage ver la pédosphère des ions phosphates sans permetre le passage réciproque des substrats carbonés alimentant les BAC dans la résidusphère. Cela implique que la chimie et la cinétique de Pr n'est pas directement affectée par ces substrats carbonés, mais seulement par une progressive disparition de Pi en solution du fait de l'action de MIC renforcée de bac ou BAC.

Concrètement, piloter MRPS implique ;

➢ Obtention des valeurs v, w et p → Pr et PT, avantageusement à partir de simples variables pédologiques (Tableau 2) à l'aide d'une série de RLVM (régression linéaire à variables multiples ; XLStats™) ;

➢ Calcul des $IMMP_{MIC}$, $IMMP_{bac}$ et $IMMP_{BAC}$ à travers 420 minutes d'incubation (Figure 6) en mg-P par L de milieu de culture (Sidat et al. 1999) en fonction des % de Pr au Tableau 1, pourcentages de Pr réalistes basés sur les données empiriques de divers auteurs (eg. Morel 2002 - figure 7, Frossard et al. 2011, Oehl et al. 2009, Morel et al. 2014, etc. ;

➢ Extrapolation non linéaire des susdits $IMMP_{MIC}$, $IMMP_{bac}$ et $IMMP_{BAC}$ en mg-P/L à divers temps d'incubation de 0 à 420 minutes (Tableau 3). Pour ce faire j'utilise des fonctions en puissance positive quasi linéaires sur 420 minutes (Tableau 3-bis) ;

➢ Extrapolation non linéaire de Pr à divers temps d'incubation de 0 à 420 minutes selon le modèle cinétique proposé par Morel 2002. Notons que sur 420 minutes ces progressions de Pr sont essentiellement linéaires, et justifier ainsi l'utilisation de RLVM ;

➢ Régression linéaire à variable multiple (RLVM) de Pr en fonction du temps (0 - 420 minutes) et de la progression des susdites $IMMP_{MIC}$, $IMMP_{bac}$ et $IMMP_{BAC}$. Encore, cette RLVM est légitime puisque ces extrapolations d'IMMP et Pr à 420 minutes (Tableau 3 et Figure 6), bien que foncièrement non linéaires, sont néanmoins *quasi* linéaires sur 420 minutes (cf. Morel 2002/figure 16, et Siuda et Chrost 2001/figure 1) - Cette RLVM permet d'obtenir les coefficients *a* · tmin aux équations (1) et (2) permettant le calcul de Pr.

➢ Calcul de Pr fonction linéaire du temps *ajusté* par le paramètre tmin de la susdites régression à variable multiple ; ce Pr ajusté (Pr') sera nécessairement inférieur à Pr dans une proportion affectée, mais non proportionnelle, par $IMMP_{MIC,\ bac}$ ou $_{BAC}$ ;

➢ Rétro - calcul de Cp à partir de Pr (Pr') ajusté et des valeurs inchangées de v, w et p de manière à apprécier la baisse de la concentration de P en solution du sol une fois cette (sur)immobilisation du P attribuable à MIC et bac ou BAC affectée ;

➢ Estimation de l'eStarter à partir des fonctions empiriques de Bermudez et al. 2002 et 2004 pour Pr et Pr ajusté pour l'effet $IMMP_{MIC}$, $IMMP_{bac}$ et $IMMP_{BAC}$. Si les teneurs en Al et Fe sont disponibles, il est aussi possible de calculer l'eStarter pour TSP et TSP ajusté, TSP étant égale à [Pr / (0,5 x (Al + Fe))] (Figure 3) ;

➢ Estimation de l'efficacité relative, erIMMP, des $IMMP_{MIC}$, $IMMP_{bac}$ et $IMMP_{BAC}$ à améliorer l'eStarter selon STP (Pr), TSP, voire PTS si disponible (Figures 8-i, 8-ii et 8-iii).

**TABLEAU 2 :** Paramètres pédologiques et de transfert du P en solution du sol selon Morel 2002 et Morel et al. 2004 et 2011 ayant sevis au calcul des Pr initiaux, PT et taux de saturation en P (TSP ; %) selon MAPAQ 2003 et Renneson et al. 1999. Les Pr initiaux servirent pour la modélisation MRPS bipartite résidu - / pédo - sphère (Figures 6) pour un temps d'incubation de 420 minutes (7 heures) égale au temps d'incubation des bactéries immobilisatrices de P criblées par Sidat et al,. 1999.

| Id. Sol | % Argile | pH | % C-org. | mg(Al+Fe)/kg | cmol-CEC/kg | v | w | p | STP | PTS | TSP |
|---|---|---|---|---|---|---|---|---|---|---|---|
| 1 | 5 | 5,8 | 2,2 | 36 | 3,9 | 0,4 | 0,19 | 0,54 | 10,4 | 2 | 0,58 |
| 2 | 6 | 5,8 | 0,6 | 56 | 1,9 | 1,7 | 0,54 | 0,36 | 15,0 | 8 | 0,53 |
| 3 | 6 | 5,9 | 1 | | | 1,9 | 0,72 | 0,36 | 16,7 | 12 | |
| 4 | 12 | 7,3 | 0,9 | 98 | 5,9 | 5,7 | 0,69 | 0,24 | 24,3 | 17 | 0,50 |
| **5** | **19** | **5,8** | **1,8** | | **8** | **6,8** | **0,29** | **0,37** | **63,5** | **18** | |
| 6 | 21 | 7,3 | 1,2 | 240 | 13,2 | 21 | 0,46 | 0,26 | 101,0 | 46 | 0,84 |
| 7 | 18 | 5,7 | 2,2 | 452 | 5,6 | 16,8 | 0,33 | 0,34 | 131,0 | 43 | 0,58 |
| 8 | 10 | 5,7 | 2,8 | 167 | 11 | 8,1 | 0,39 | 0,39 | 85,4 | 33 | 1,02 |
| 9 | 54 | 6,7 | 2,5 | | 31 | 20,4 | 0,52 | 0,31 | 132,7 | 69 | |
| 10 | 50 | 4,8 | 3,1 | 519 | 4,6 | 35,3 | 0,34 | 0,37 | 329,9 | 112 | 1,27 |
| 11 | 71 | 4,4 | 2,7 | 326 | 5,6 | 39,6 | 0,41 | 0,36 | 348,4 | 143 | 2,14 |
| 12 | 6 | 5,9 | 1,03 | 41,6 | 3,6 | 1,76 | 0,68 | 0,38 | 17,5 | 12 | 0,84 |

(suite)

| Id. Sol | % Argile | pH | % C-org. | mg(Al+Fe)/kg | cmol-CEC/kg | v | w | p | STP | PTS | TSP |
|---|---|---|---|---|---|---|---|---|---|---|---|
| 13 | 12 | 7,3 | 0,93 | 65,2 | 5,9 | 5,7 | 0,69 | 0,24 | 24,3 | 17 | 0,75 |
| 14 | | 5,9 | 2,3 | 92,8 | 16,9 | 7,23 | 0,43 | 0,36 | 63,6 | 27 | 1,37 |
| 15 | 30,5 | 5,6 | 3,74 | 165 | | 6,39 | 0,47 | 0,43 | 85,8 | 40 | 1,04 |
| 16 | 45,8 | 5,1 | 3,11 | 500 | 4,9 | 35,3 | 0,34 | 0,37 | 329,9 | 112 | 1,32 |
| 17 | 14,1 | 5,9 | 1,82 | | 8,4 | 28,1 | 0,41 | 0,28 | 152,5 | 63 | |
| 18 | 13,2 | 5,2 | 1,38 | | 7,9 | 26,6 | 0,36 | 0,32 | 183,8 | 66 | |

J'ai affecté l'IMMP en milieu de culture (mg-P/L) au transfert et fixation réciproque du P tellurique selon Morel 2002 de manière à chiffrer approximativement l'impacte de telles (sur)immobilisations du P tellurique sur le niveau de Pr (i.e. STP), PTS, voire TSP du sol, et donc accessoirement sur l'eStarter (Figures 8 et 9). Il est ainsi aussi possible d'apprécier l'atténuation de Pr → Pr' ainsi que sont effet sur l'augmentation de l'eStarter attribuable au simple enfouissement des RCS, à la bactérisation des ceux-ci avec une quelconque biomasse bac indépendamment de son pouvoir immobilisateur de P, et enfin à la bactérisation des RCS avec une biomasse BAC particulièrement IMMP (Figure 6).

TABLEAU 3 : Résultats des modélisations de l'atténuation de Pr, en vue d'une augmentation de l'eStarter, lors de l'immobilisation simultanée du P, sur 420 minutes d'incubation (tmin) en solution par soit la flore microbienne de la résidusphère (IMMP$_{MIC}$), enrichie ou non de bactériens plus (IMMP$_{BAC}$) ou moins (IMMP$_{bac}$) immobilisatrices de P. Notons que les ΔMIC, Δbac et ΔBAC sont établis selon les valeurs proposées au Tableau 1 ; le cas exemplifié ici est celui du sol no. 5 (cf. Tableaux 2, et 4, 5 et 6)dont la valeur initiale du Pr est de 63,55 mg-P / kg-sol, les six (6) autres modélisations ayant déjà été effectuées, sur un total de 18 modélisation possibles (A suivre).

| sans RCS (donc sans IMMP ...) | | | | | |
|---|---|---|---|---|---|
| tmin | mg-P/L | Pr | IMMP$_{MIC}$ | *IMMP$_{bac}$, BAC* | Total |
| 0,01 | 0,0 | 0,01 | na | na | 0,01 |
| 60 | *0,00* | *12,82* | na | na | 12,82 |
| 120 | *0,00* | *22,68* | na | na | 22,68 |
| 180 | *0,00* | *31,65* | na | na | 31,65 |
| 240 | *0,00* | *40,10* | na | na | 40,10 |
| 300 | *0,00* | *48,18* | na | na | 48,18 |
| 360 | *0,00* | *55,98* | na | na | 55,98 |
| 420 | 0,00 | **63,55** | **na** | **na** | **= 63,55** |
| | 63,55 | Δ MIC | | | Δ IMMP |
| | | *0.000* | | | *0,000* |

| IMMP$_{MIC}$ | | | | | |
|---|---|---|---|---|---|
| tmin | mg-P-MIC/L | Pr' : MIC | IMMP$_{MIC}$ | *IMMP$_{bac}$, BAC* | Total |
| 0,01 | 0,0 | 0,00 | 0,01 | na | 0,01 |
| 60 | *1,11* | 6,17 | 6,65 | na | 12,82 |
| 120 | *1,61* | 12,33 | 10,34 | na | 22,68 |
| 180 | *2, 01* | 18,50 | 13,15 | na | 31,65 |
| 240 | *2,35* | 24,67 | 15,44 | na | 40,10 |
| 300 | *2,65* | 30,83 | 17,35 | na | 48,18 |
| 360 | *2,92* | 37,00 | 18,98 | na | 55,98 |
| 420 | 3,18 | **43,17** | **20,38** | **na** | **= 63,55** |
| | 43,17 | Δ MIC | | | Δ IMMP |
| | | *0,050* | | | *0,050* |

(suite)

| | | IMMP$_{bac}$ | | | |
|---|---|---|---|---|---|
| tmin | mg-P-bac/L | Pr' : bac | IMMP$_{MIC}$ | IMMP$_{bac}$ | Total |
| 0,01 | 0,0 | 0,00 | 0,01 | 0,00 | 0,01 |
| 60 | *1,54* | 5,81 | 6,65 | 0,36 | 12,82 |
| 120 | *2,31* | 11,62 | 10,34 | 0,71 | 22,68 |
| 180 | *2,92* | 17,43 | 13,15 | 1,07 | 31,65 |
| 240 | *3,45* | 23,24 | 15,44 | 1,43 | 40,10 |
| 300 | *3,92* | 29,05 | 17,35 | 1,78 | 48,18 |
| 360 | *4,36* | 34,86 | 18,98 | 2,14 | 55,98 |
| 420 | 4,77 | **40,67** | **20,38** | **2,49** | **= 63,55** |
| | | 40,67 | Δ MIC | Δ bac | Δ IMMP |
| | | | *0,050* | *0,025* | *0,075* |

| | | IMMP$_{BAC}$ | | | |
|---|---|---|---|---|---|
| tmin | mg-P-BAC/L | Pr' : BAC | IMMP$_{MIC}$ | IMMP$_{BAC}$ | Total |
| 0,01 | 0,0 | 0,00 | 0,01 | 0,00 | 0,01 |
| 60 | *1,95* | 5,51 | 6,65 | 0,65 | 12,82 |
| 120 | *2,97* | 11,03 | 10,34 | 1,30 | 22,68 |
| 180 | *3,80* | 16,54 | 13,15 | 1,95 | 31,65 |
| 240 | *4,53* | 22,06 | 15,44 | 2,61 | 40,10 |
| 300 | *5,18* | 27,57 | 17,35 | 3,26 | 48,18 |
| 360 | *5,79* | 33,09 | 18,98 | 3,91 | 55,98 |
| 420 | 6,35 | **38,60** | **20,38** | **4,56** | **= 63,55** |
| | | 38,60 | Δ MIC | Δ BAC | Δ IMMP |
| | | | *0,050* | *0,050* | *0,100* |

Notons que la répartition du P tellurique entre Pr, Pr', IMMP$_{MIC}$ et IMMP$_{bac}$ ou IMMP$_{BAC}$ va maintenant dépendre, en première approximation, de la présence ou non des RCS (IMMP$_{MIC}$) inoculés, on non, avec bac (IMMP$_{bac}$) ou BAC (IMMP$_{BAC}$). En ce sens P$_{total}$ = Pr = Pr' - IMMPMIC +/- IMMP$_{bac}$ ou IMMP$_{BAC}$. Dans tous les les cas, P$_{total}$ sera égale à Pr (i.e. non atténué), soit ici et à titre d'exmple 63,55 mg-P/kg-sol (sol id. no. 6 ; Tableau 2) ; les éléments à additionner en ce sens sont encadrés. Notons enfin que ΔIMMP = ΔMIC, +Δbac ou encore + ΔBAC selon le cas.

Les valeurs des coefficients p et q pour l'extrapolation des immobilisations des mg-P par litre de milieu de culture à hauteur de ΔMIC, Δbac ou ΔBAC x Pr (Tableau 3) sont rapportés ; en absence de d'IMMP microbienne et/ou bactérienne (i.e. sans RCS, et donc sans dMIC), ces coefficients p et q décrivent la progression de Pr = P$_{total}$ sur les 420 minutes d'incubation. Les coefficients a (· tmin) décrivent eux la progression de Pr atténué (Pr') de telles IMMP en fonction du temps d'incubation et de la progression simultanée des mg-P/L immobilisés en milieux de culture (eg. Sidat et al. 1999) à hauteur de dMIC et/ou dbac ou dBAC.

Ces régressions linéaires à variables multiples (RLVM), intermédiaires (atténuées ; Pr') entre Pr et ces divers (trois) niveaux d'IMMP en milieux de culture (mg-P/L) sont représentées à la Figure 6. A noter enfin au Tableau 3-bis une atténuation de Pr (Pr') et de Cp (Cp') de plus importante lorsque MIC des RCS est renforcée avec bac et BAC ; c'est cette atténuation, transitoire, des teneurs en P biodisponsibles qui contribuera à augmenter l'eStarter (cf. Tableau 4 à 6, et Figure 7 et 9).

**TABLEAU** 3 **BIS** : Résultats des modélisations de l'atténuation de Pr, en vue d'une augmentation de l'eStarter, lors de l'immobilisation simultanée du P en solution par soit la flore microbienne de la résidusphère ($IMMP_{MIC}$), enrichie ou non de bactériens plus ($IMMP_{BAC}$) ou moins ($IMMP_{bac}$) immobilisatrices de P. Notons que les ΔMIC, Δbac et ΔBAC sont établis selon les valeurs proposées au Tableau 1 ; le cas exemplifié ici est celui du sol no. 5 (cf. Tableaux 2, et 4, 5 et 6) dont la valeur initiale du Pr est de 63,55 mg-P / kg-sol, les six (6) autres modélisations ayant déjà été effectuées, sur un total de 18 modélisation possibles.

SANS RCS

| Id. Sol | Pr mg-P/kg | Cp mg-P/L | p tmin^q | | a · tmin |
|---|---|---|---|---|---|
| 1 | 10,44 | 1,0000 | 2,02E-01 | 6,53E-01 | na |
| 4 | 24,29 | 1,0000 | 2,91E-01 | 7,32E-01 | na |
| **5** | **63,55** | **1,0000** | **4,42E-01** | **8,23E-01** | **na** |
| 6 | 100,99 | 1,0000 | 5,40E-01 | 8,66E-01 | na |
| 7 | 130,98 | 1,0000 | 6,04E-01 | 8,91E-01 | na |
| 8 | 85,42 | 1,0000 | 5,02E-01 | 8,50E-01 | na |
| 10 | 329,90 | 1,0000 | 9,01E-01 | 9,77E-01 | na |

AVEC RCS (MIC)

| Id. Sol | Pr' mg-P/kg | Cp' mg-P/L | p tmin^q | | a · tmin |
|---|---|---|---|---|---|
| 1 | 4,92 | 0,0191 | 7,47E-02 | 4,37E-01 | 0,012 |
| 4 | 12,68 | 0,3898 | 1,08E-01 | 5,16E-01 | 0,030 |
| **5** | **43,17** | **0,2600** | **1,21E-01** | 5,41 E-01 | **0,103** |
| 6 | 67,21 | 0,4127 | 1,99E-01 | 6,50E-01 | 0,160 |
| 7 | 92,39 | 0,3472 | 2,23E-01 | 6,74E-01 | 0,220 |
| 8 | 60,07 | 0,4055 | 1,35E-01 | 5,69E-01 | 0,143 |
| 10 | 309,11 | 0,8258 | 2,47E-01 | 6,96E-01 | 0,736 |

AVEC RCS (MIC + bac)

| Id. Sol | Pr' mg-P/kg | Cp' mg-P/L | p tmin^q | | a · tmin |
|---|---|---|---|---|---|
| 1 | 4,62 | 0,0137 | 8,23E-02 | 4,58E-01 | 0,011 |
| 4 | 11,95 | 0,3577 | 1,19E-01 | 5,37E-01 | 0,028 |
| **5** | **40,67** | **0,2200** | **1,44E-01** | **5,79E-01** | **0,097** |
| 6 | 64,55 | 0,3780 | 2,20E-01 | 6,71 E-01 | 0,154 |
| 7 | 89,15 | 0,3116 | 2,46E-01 | 6,95E-01 | 0,212 |
| 8 | 57,82 | 0,3677 | 1,64E-01 | 6,07E-01 | 0,138 |
| 10 | 305,52 | 0,7979 | 2,94E-01 | 7,34E-01 | 0,727 |

AVEC RCS (MIC + BAC)

| Id. Sol | Pr' mg-P/kg | Cp' mg-P/L | p tmin^q | | a · tmin |
|---|---|---|---|---|---|
| 1 | 4,34 | 0,0099 | 8,90E-02 | 4,75E-01 | 0,010 |
| 4 | 11,34 | 0,3315 | 1,28E-01 | 5,54E-01 | 0,027 |
| **5** | **38,60** | **0,1800** | **1,63E-01** | **6,06E-01** | **0,092** |
| 6 | 62,07 | 0,3471 | 2,38E-01 | 6,88E-01 | 0,148 |
| 7 | 86,15 | 0,2809 | 2,66E-01 | 7,12E-01 | 0,205 |
| 8 | 55,21 | 0,3266 | 1,85E-01 | 6,34E-01 | 0,131 |
| 10 | 302,26 | 0,7731 | 3,33E-01 | 7,61 E-01 | 0,720 |

TABLEAU 4 : Résultats de la modélisation de l'efficacité relative des engrais P starter (erSTART ; %) avec et sans l'immobilisation du P (IMMP) attribuable ici *qu'à l'activité de la microflore (MIC)* de la résidusphère **sans bactérisation des RCS pailleux aux sol** (RCS). L'efficacité des engrais P est ici le pourcentage d'augmentation en biomasse aérienne d'un maïs-grain en début de culture attribuable à des telles réductions des teneurs en P du sol ($P_{Olsen}$ ; mg-P/kg-sol) ou du taux de saturation en P (TSP ; %) obtenu empiriquement selon les fonctions aux Figures 4 et 3, respectivement.

| Id. Sol | *avec IMMP$_{MIC}$* | | | | selon STP (cf. Figure 4) | | | selon TSP (cf. Figure 3) | | |
|---|---|---|---|---|---|---|---|---|---|---|
| | Pr mg-P/kg | TSP | Cp mg-P/L | $\Delta$IMMP Cp | % eStarter -IMMP | % eStarter +IMMP | +/- IMMP$_{MIC}$ | % eStarter -IMMP | % eStarter +IMMP | +/- IMMP$_{MIC}$ |
| 1 | 4,92 | 0,27 | 0,02 | 0,98 | 51,68 | 111,22 | 2,15 | 102,31 | 169,88 | 1,66 |
| 2 | | | | | 35,82 | | | 108,14 | | |
| 3 | | | | | 31,98 | | | | | |
| 4 | 12,68 | 0,26 | 0,40 | 0,61 | 21,85 | 42,38 | 1,94 | 113,71 | 176,26 | 1,55 |
| **5** | **43,17** | | **0,26** | **0,82** | **8,20** | **13,63** | **1,66** | | | |
| 6 | 67,21 | 0,56 | 0,41 | 0,59 | 5,12 | 7,75 | 1,51 | 79,59 | 104,73 | 1,32 |
| 7 | 92,39 | 0,41 | 0,35 | 0,65 | 3,92 | 5,60 | 1,43 | 102,35 | 129,50 | 1,27 |
| 8 | 60,07 | 0,72 | 0,41 | 0,59 | 6,07 | 8,69 | 1,43 | 69,78 | 88,47 | 1,27 |
| 9 | | | | | 3,87 | | | | | |
| 10 | 309,11 | 1,19 | 0,83 | 0,17 | 1,53 | 1,64 | 1,07 | 60,27 | 62,97 | 1,04 |
| 11 | | | | | 1,45 | | | 42,46 | | |
| 12 | | | | | 30,57 | | | 79,69 | | |
| 13 | | | | | 21,85 | | | 86,40 | | |
| 14 | | | | | 8,19 | | | 57,28 | | |
| 15 | | | | | 6,04 | | | 69,00 | | |
| 16 | | | | | 1,53 | | | 58,77 | | |
| 17 | | | | | 3,36 | | | | | |
| 18 | | | | | 2,78 | | | | | |

14

EP 3 138 402 A1

**TABLEAU 5** : Résultats de la modélisation de l'efficacité relative des engrais P starter (erSTART ; %) avec et sans l'immobilisation du P (IMMP) attribuable ici à l'activité de la microflore (MIC) de la résidusphère **avec bactérisation des RCS pailleux aux sol** (RCS) **à l'aide d'une souche bac sans pouvoir IMMP particulier**. L'efficacité des engrais P est ici le pourcentage d'augmentation en biomasse aérienne d'un maïs-grain en début de culture attribuable à des telles réductions des teneurs en P du sol ($P_{Olsen}$ ; mg-P/kg-sol) ou du taux saturation en P (TSP ; %) obtenu empiriquement selon les fonctions aux Figures 4 et 3, respectivement.

| | avec IMMP$_{bac}$ | | | | selon STP (cf. Figure 4) | | | selon TSP (cf. Figure 3) | | |
|---|---|---|---|---|---|---|---|---|---|---|
| Id. Sol | Pr mg-P/kg | TSP | Cp mg-P/L | $\Delta$IMMP Cp | % eStarter -IMMP | % eStarter +IMMP | +/- IMMP$_{bac}$ | % eStarter -IMMP | % eStarter +IMMP | +/- IMMP$_{bac}$ |
| 1 | 4,62 | 0,26 | 0,01 | 0,99 | 51,68 | 118,58 | 2,29 | 102,31 | 177,24 | 1,73 |
| 2 | | | | | 35,82 | | | 108,14 | | |
| 3 | | | | | 31,98 | | | | | |
| 4 | 11,95 | 0,24 | 0,36 | 0,64 | 21,85 | 45,02 | 2,06 | 113,71 | 183,45 | 1,61 |
| 5 | **40,67** | | **0,22** | **0,85** | **8,20** | **14,31** | **1,74** | | | |
| 6 | 64,55 | 0,54 | 0,38 | 0,62 | 5,12 | 8,07 | 1,58 | 79,59 | 107,62 | 1,35 |
| 7 | 89,15 | 0,39 | 0,31 | 0,69 | 3,92 | 5,81 | 1,48 | 102,35 | 132,66 | 1,30 |
| 8 | 57,82 | 0,69 | 0,37 | 0,63 | 6,07 | 9,03 | 1,49 | 69,78 | 90,77 | 1,30 |
| 9 | | | | | 3,87 | | | | | |
| 10 | 305,52 | 1,18 | 0,80 | 0,20 | 1,53 | 1,66 | 1,08 | 60,27 | 63,47 | 1,05 |
| 11 | | | | | 1,45 | | | 42,46 | | |
| 12 | | | | | 30,57 | | | 79,69 | | |
| 13 | | | | | 21,85 | | | 86,40 | | |
| 14 | | | | | 8,19 | | | 57,28 | | |
| 15 | | | | | 6,04 | | | 69,00 | | |
| 16 | | | | | 1,53 | | | 58,77 | | |
| 17 | | | | | 3,36 | | | | | |
| 18 | | | | | 2,78 | | | | | |

**TABLEAU 6** : Résultats de la modélisation de l'efficacité relative des engrais P starter (erSTART ; %) avec et sans l'immobilisation du P (IMMP) attribuable ici à l'activité de la microflore (MIC) de la résidusphère **avec bactérisation des RCS pailleux aux sol** (RCS) **à l'aide d'une souches BAC particulièrement IMMP.** L'efficacité des engrais P est ici le pourcentage d'augmentation en biomasse aérienne d'un maïs-grain en début de culture attribuable à des telles réductions des teneurs en P du sol ($P_{Olsen}$ ; mg-P/kg-sol) ou du taux saturation en P (TSP ; %) obtenu empiriquement selon les fonctions aux Figures 4 et 3, respectivement.

| Id. Sol | avec IMMP$_{BAC}$ | | | | selon STP (cf. Figure 4) | | | selon TSP (cf. Figure 3) | | |
|---|---|---|---|---|---|---|---|---|---|---|
| | Pr mg-P/kg | TSP | Cp mg-P/L | $\Delta$ IMMP Cp | % eStarter -IMMP | % eStarter +IMMP | +/- IMMP$_{BAC}$ | % eStarter -IMMP | % eStarter +IMMP | +/- IMMP$_{BAC}$ |
| 1 | 4,34 | 0,24 | 0,01 | 0,99 | 51,68 | 126,38 | 2,45 | 102,31 | 184,87 | 1,81 |
| 2 | | | | | 35,82 | | | 108,14 | | |
| 3 | | | | | 31,98 | | | | | |
| 4 | 11,34 | 0,23 | 0,33 | 0,67 | 21,85 | 47,49 | 2,17 | 113,71 | 190,05 | 1,67 |
| **5** | **38,60** | | **0,18** | **0,87** | **8,20** | **15,00** | **1,83** | | | |
| 6 | 62,07 | 0,52 | 0,35 | 0,65 | 5,12 | 8,40 | 1,64 | 79,59 | 110,50 | 1,39 |
| 7 | 86,15 | 0,38 | 0,28 | 0,72 | 3,92 | 6,02 | 1,53 | 102,35 | 135,75 | 1,33 |
| 8 | 55,21 | 0,66 | 0,33 | 0,67 | 6,07 | 9,47 | 1,56 | 69,78 | 93,65 | 1,34 |
| 9 | | | | | 3,87 | | | | | |
| 10 | 302,26 | 1,16 | 0,77 | 0,23 | 1,53 | 1,67 | 1,09 | 60,27 | 63,93 | 1,06 |
| 11 | | | | | 1,45 | | | 42,46 | | |
| 12 | | | | | 30,57 | | | 79,69 | | |
| 13 | | | | | 21,85 | | | 86,40 | | |
| 14 | | | | | 8,19 | | | 57,28 | | |
| 15 | | | | | 6,04 | | | 69,00 | | |
| 16 | | | | | 1,53 | | | 58,77 | | |
| 17 | | | | | 3,36 | | | | | |
| 18 | | | | | 2,78 | | | | | |

EP 3 138 402 A1

***B. DICP et la commensurabilité des cinétiques de sur - immobilisation du P***

Pour cette seconde démonstration de la faisabilité de réalisation de l'invention, j'ai eu recours à code informatique R réifiant la compartimentation tripartite du pédo - environnement schématisé à la Figure 5. Concrètement, trois compartiments, C1, C2 et C3 correspondant aux pédosphère, résidusphère et RCS, respectivement, sont proposés. Ce code R (Tableau 7) a été piloté pour chacun des sept (7) sols. Observons les données publiées par Cole et al. 1978, Andersonet al. 1978 et Zou et al. 1992 reprises ici à la Figure 9. En effet, la faisabilité de l'invention est conditionnelle ;

> ➤ la taille d'IMMPc3, i.e. la quantité de Pi pouvant être sur - immobilisé par les BAC des RCS soit être commensurable avec les capacités des populations microbiennes du sol, faute de quoi, IMMPc3 sera irréalisable par voie microbiologique ;

> ➤ la durée d'immobilisation par les BAC, i.e. la durée de rétention à travers l'interculture de ce P sur - immobilisé, doit être suffisamment longue pour qu'une inoculation automnale des RCS puisse affecter l'eStarter au printemps.

**Tableau 7** : code R du modèle DICP traitant numériquement les cinétiques de diffusion du P (ion phosphate) entre les résidu - et pédo - sphères - respectivement C2 et C1, en proximité des RCS (C3) ; voir le Tableau 8 pour es unités des données initiales (data 1 à 6). L'équation maîtresse régissant la diffusion du P entre C1, C2 et C3 provient elle de Bhadoria et al. 1991 (éq. 1). Schématiquement, le modèle DICP permet de simuler le transfert du P entre les RCS (C3), la résidusphère (C2), et la pédosphère (C1 ; sol environnant) tel qu'illustrée à la Figure 5.

```
rm(list=ls())
data <- scan(file = "data iRPo.txt", skip = 1, n = -1, dec = ",")
data <- matrix(data, ncol = 6, byrow = TRUE)

for (n in 1:length(data[,1])) {

        id <- data[n,1]
        Dc <- data[n,2]
        A <- data[n,3]
        tinc <- data[n,4]
        C1 <- data[n,5]
        C2 <- data[n,6]

z <- seq(0.0001, 10, by = 0.5)
for (Dc in z) {

simMt2 <- function(t, Dc, A, C2, C1) return(sqrt(((Dc*3600*1E-09)*(A*(C1-C2)^2*t))/3.418))
        Mtc2 <- foreach(t=1:tinc) %do% simMt2(t, Dc, A, C1, C2)

C2 <- C1 - as.numeric(Mtc2[tinc])
C3 <- 0.00

simMt3 <- function(t, Dc, A, C2, C3) return(sqrt(((Dc*3600*1E-09)*(A*(C2-C3)^2*t))/3.418))
        Mtc3 <- foreach(t=1:tinc) %do% simMt3(t, Dc, A, C2, C3)

IMMPc3 <- as.numeric(Mtc3[tinc])
Pi <- C1 - IMMPc3

x <- matrix(c(id, Dc, C1, C2, IMMPc3, Pi), ncol=6)
y <- data.frame(x)
write.table(x, file = "Validation iRPo", append = TRUE, sep="\t", col.names=FALSE, dec=",")  }}
```

La quantité de P sur - immobilisé par les BAC suite à l'amendement du sol avec du glucose (200 ppm réparti sur 6 jours) est de l'ordre de quelques mg-P / kg-sol (Figure 9). Cette sur - immobilisation représente entre 1/10 et 1/30 du P normalement immobilisé par voie microbienne, soit de l'ordre de 10 a 12 mg-P / kg-sol (Figure 9-a) ; voir aussi Balota et al. 2003 (tableau 2) et Zou et al. 1992 (figure 3). De plus, la durée d'immobilisation de ces 10 à 20 ppm de P, y compris donc les susdits quelques 0,3 à 4 ppm de P est vraisemblablement bel et bien de l'ordre de quelques mois (Figure 9-b). Les données de Cole et al. 1978 proviennent de microcosmes de 20 g à température ambiance (Anderson et al. 1978) ; si on applique la règle qu'une semaine d'incubation en microcosme équivaut grosso modo à un mois d'inter-culture hivernale in situ, il est clair que le cycle d'immobilisation → mobilisation (re-largage) du P est compris in situ entre 4 et 6 mois.

IMMPc3 dictera donc l'efficacité de l'invention. La Figure 10 représente $IMMP_{MIC}$, $IMMP_{bac}$ et $IMMP_{BAC}$ selon le type d'azotobactérisation des RCS ; IMMPc3 pour les BAC particulièrement phospho - immobilisatrices est bel et bien plus important que pour les bac. Il faut aussi qu'IMMPc3 soit le résultat d'une augmentation commensurable du coefficient de diffusion, Dc. En ce sens, la Figure 10 décrit pour chacun des sept (7) sols retenus la progression d'IMMPc3, i.e. la quantité de P "sur - immobilisé" par les biomasses azotobactériennes inoculées sur les RCS par rapport à l'hypothétique augmentation de Dc, soit ici de 1 à 10 fois 3600 x $10^{-9}$ $cm^2$/heure. Inversement, on voit bien que ces *sur - immobilisations* de P de l'ordre de 0,30 à 4 kg-P/kg-sol peuvent être parfaitement réalisées via une certaine augmentation, fort modeste, de Dc par un facteur d'au plus 50%. Les cinétiques de diffusion du P de la résidusphère vers la surface des RCS ne sont donc pas limitatives pour la réalisation de la présente invention puisque de modestes augmentations de Dc sont facilement associées à des augmentations d'IMMPc3 commensurables avec cette sur - immobilisation des quelques mg-P / kg-sol nécessaires à la réalisation de l'invention.

Au Tableau 8 les données initiales nécessaire au pilotage de DICP (Tableau 7). Le P initialement dans la pédosphère (C1) va ainsi migrer vers la résidusphère (C2), voire en toute proximité des RCS (C3) s'il y a sur - immobilisation du P du fait de l'inoculation des RCS au sens de la présente invention. La variable Dc est elle ici simple un facteur multiplicatif de Dc = 3600 x $10^{-9}$ $cm^2$/heure de manière à générer les graphes à la Figure 10.

**Tableau 8 :** Données initiales pour DICP (Tableau 7 ; cf. data <- scan(file ...). Les valeurs de C1 proviennent pour chacun des sept (7) sols en question directement des Tableaux 2 (valeurs STP ; mg-P / kg-sol) et 3 (valeurs Pr ; mg-P / kg-sol). Les valeurs de C2 sont elles établies à 0,00 au début de la période l'incubation de 504 heures, soit 21 jours.

| id. sol | Dc | A | tinc | C1 | C2 |
|---|---|---|---|---|---|
| Cf. Morel et al. 2002 | cm2/heure | cm2 | heures | mg-P/kg-sol | mg-P/kg-sol |
| 1 | 1 | 14 | 504 | 10,44 | 0 |
| 4 | 1 | 14 | 504 | 24,29 | 0 |
| 5 | 1 | 14 | 504 | 63,55 | 0 |
| 6 | 1 | 14 | 504 | 100,99 | 0 |
| 7 | 1 | 14 | 504 | 130,98 | 0 |
| 8 | 1 | 14 | 504 | 85,42 | 0 |
| 10 | 1 | 14 | 504 | 329,9 | 0 |

En ce sens, Dc sera modulé *incrémentiellement* de 0,00 (0,001) à 10 de manière à générer une gamme de IMMPc3 (Figure 10). In fine, plus les teneurs en P en proximité des RCS teneurs sont faibles, plus l'eStarter sera grande. Encore une fois, ces niveaux de sur - immobilisation sont modestes, parfaitement réalisables (Figures 9 et 10) et augmentent néanmoins eStarter (Figure 7). Pour preuve, au Tableau 9 les niveaux (quantités) de Pi sur - immobilisé par les bac moins phospho - immobilisatrices que les BAC qui le sont en principe un peu plus ;

**Tableau 9 :** Niveaux de sur - immobilisation du P en proximité immédiate des RCS attribuables à bac et BAC par rapport à la simple immobilisation du P attribuable à la flore MIC des RCS. Ces valeurs (mg-P / kg-sol) sont les différences entre les valeurs de Pr (mg-P / kg-sol) aux Tableau 4 et 5 (d(bac-MIC)), et 4 et 6 (d(BAC-MIC)).

| id. sol (Morel et al. ...) | d (bac - MIC) | d (BAC - MIC) |
|---|---|---|
| 1 | -0,30 | - 0,58 |
| 4 | - 0,73 | - 1.34 |
| 5 | -2,50 | - 4.57 |
| 6 | -2,66 | -5.14 |
| 7 | -3,24 | - 6.24 |
| 8 | -2,45 | - 4.86 |
| 10 | -3,59 | - 6.85 |

## APPLICATIONS BIOINDUSTRIELLES ET AGRONOMIQUES

L'application agronomique de l'invention va comporter quatre (4) étapes ;

1) l'obtention par criblage de souches BAC particulièrement capable d'IMMP
2) la préconisation de tels inocula aux RCS,

3) l'application in situ sur RCS de ces inocula BAC

4) la valorisation de l'IMMP$_{BAC}$ au moment de l'apport des engrais P starter.

### 1. Obtention par criblage de souches BAC particulièrement IMMP

L'absence de base documentaire concernant le criblage de souches bactérienne telluriques particulièrement IMMP atteste de la nouveauté de l'invention. Il existe cependant une base de connaissance sur l'obtention de bactéries capables d'appauvrir en P les eaux usées et/ou boues de stations d'épurations (Sidat et al. 1999, Bond et al. 1999, etc.). Soit on applique les protocoles d'obtention de souches bactérienne environnementales IMMP à des échantillons de terres arables afin d'obtenir des bactéries elles aussi particulièrement IMMP, soit on obtient directement de biofilms de réacteurs destinés à l'épuration des eaux usées de telles bactéries environnementales, la fabrication d'inocula à partir de ces dernières destinées à la valorisation bactériologique des RCS étant en soi inhabituel. Étant donné que les bactéries du sol les mieux adaptées à la vie tellurique sont foncièrement benthiques, i.e. comprises dans et/ou constituantes de biofilms (FR 2833016), ces deux approches sont tenables.

Pour ce qui est de l'obtention de bactéries telluriques. Il est raisonnable de prétendre que les sols les plus pauvres, souvent podzolisés et/ou ferralitiques, abritent des bactéries ayant une grande affinité pour Pi ; celles-ci devraient même en principe chercher à sur - accumuler (sur - immobiliser) Pi, un peu comme le font d'autres bactéries à l'égard du fer ou de molybdène, métaux souvent insuffisamment ou peu bio - disponibles mais cofacteurs de diverses réactions enzymatiques. Les données d'Achat et al. 2010a et 2010b révèlent que les microflores telluriques en sols pauvres en Pi peuvent en ce sens sur - accumuler jusqu'à 20% de Pi au dépend de la solution du sol ; les populations bactériennes comprises par ces microflores telluriques sont nécessairement de bonnes candidates BAC particulièrement capables d'IMMP.

### 2. Préconisation de telles applications aux RCS,

Je propose d'utiliser les fonctions aux Figures 7-i, ii et iii décrivant eStarter selon la teneur en Pi (STP ; Olsen et al. 1954), le pouvoir tampon (PTS ; Morel 2002) et le taux de saturation en Pi (TSP ; Renneson et al. 2008) du sol. En effet, l'efficacité escomptée des BAC par rapport aux bac moins performantes en termes d'IMMP et d'augmentation de l'eStarter s'atténue avec l'augmentation de STP, PTS et TSP (Figures 8-i, ii et iii, respectivement). Un effet de BAC par rapport à bac appréciable à hauteur de 3 à 4 %, performance à ce stade de développement très conservatrice et atteignable, sera plus détectable sur un sol dont STP (ici, P$_{Olsen}$ ; mg-P/kg-sol) est inférieure à 100, PTS est inférieur 100, et dont le TSP ne dépasse pas 100% (1,00). Si les valeurs de STP, PTS et TSP pour un sol donné dépassent de telles valeurs de références, l'efficacité de l'invention peu importante. Cela dit, l'invention est surtout destinée à l'amélioration d'engrais P starter, qui de toutes manières ne seront pas préconisés sur des sols dont les valeurs STP, PTS ou TSP sont en ce sens trop élevés.

### 3. Application in situ sur RCS de ces BAC

L'application des bac et BAC sur RCS ce fait conventionnellement, selon Claude et Fillion 2004 par exemple. Il est comme de raison peu recommandable d'apporter des fumures de fonds, l'invention s'inscrivant dans une logique non - pondérale ; ce sont les engrais P starter, voire les compléments PK apporter avec UN1 qui sont ici visés. Les BAC particulièrement IMMP peuvent aussi être des azotobactéries (eg. *Azotobacteraceae* spp.). Dans le cas contraire, un consortium de bactéries IMMP et de bactéries diazotrophes peut être utilisé. Ce consortia peut être composés de bactéries expressément bien adaptées à la vie dans les sols du fait d'une certaine endogénécité, au sens de EP13366005.0 par exemple.

### 4. Valorisation de l'IMMP$_{BAC}$ au moment de l'apport des engrais P starter.

Les engrais P starter et/ou complémentaires pouvant bénéficier de l'invention ne sont pas nécessairement minéraux. En effet, puisque la réduction de Pr, Cp et/ou TSP ce fait par gonflement des réserves de P microbien, la stimulation de la minéralisation ciblée de P organique par des phosphatases expressément réintroduites ou produites in situ par des microorganismes inoculés peuvent aussi faire office d'engrais P starter / complémentaires. Dans les faits, il existent actuellement plusieurs approches technologiques en ce sens, il existe ;

➢ EOMI (bacterisation d'EOM) ; FR 2880344 A1) combinant bactéries et des engrais oragno-minéaux (EOM) lors du démarrage de cultures *non-Fabacea* sur sols dont le degré de saturation en P est moyennement élevé (Claude et Giroux 2006) ;

➢ CHT (utilisation de la chitine pour la biofertilisation des cultures non - Fabaceae ; FR 2941589 A1) favorisant la séquestration des auxines au niveau racinaire et donc la rhizogénie et la biomasse via un meilleur prélèvement du P. Cet effet auxinogène est attribuable aux oligomères chitosaniques (COS) issus de la dégradation microbienne in situ de la chitine apportée via des EOM.

➢ PSOL (conditionnement séparé intégral d'engrais P starter à base de bactéries ; FR 1300882) comporte une séparation intégrale des partie osmogènes (OSM, sels fertilisants) et non - osmogènes (nOSM, inocula) d'EOM favorisant l'action non bactéricide d'OSM sur nOSM et la surproduction de phosphatases capables de minéraliser certaines fractions les labiles du P organique du sol.

➢ NISO (compositions pour la (co)formulation de semences ; FR 1300883) comportant le « noyautage » partiel et transitoire d'amas de semences non *Fabaceae* utilisées comme Cipan. Il en résulte une répartition non - aléatoire que très partiellement groupée, des semences Cipan favorisant la densification du système racinaire et une meilleure mobilisation du P.

L'invention améliore l'efficacité des engrais P starter appliqués près des semences de grandes cultures de printemps en rangs telles que le maïs. L'invention améliore aussi l'efficacité des engrais PK complémentaires appliqués à la volée en sortie d'hiver au moment du premier apport d'engrais N sur grandes cultures d'hiver telles que le blé (Figure 11). Selon la CDA Dordogne 2012/213 les apports complémentaires d'autres fertilisants qu'azotés comme le phosphore ou le soufre peuvent être nécessaires. Le cas échéant, mieux vaut recourir à une formulation de type Super 25 avec PK et apporter l'azote seul lors d'un second passage. Ces apports servant surtout à équilibrer les concentrations en N et P de la solution du sol au, leur rentabilité agronomique n'est pas toujours appréciable ; l'invention permettra de rentabiliser cette mesure de précaution.

### *Références, bibliographie et brevets pertinents*

Achat, David L., Christian Morel, Mark R. Bakker, Laurent Augusto, Sylvain Pellerin, Anne Gallet-Budynek et Maya Gonzalez. 2010a. Assessing turnover of microbial biomass phosphorus: Combination of an isotopic dilution method with a mass balance model. Soil Biology & Biochemistry 42 (2010) 2231e2240

Achat, David L., Mark R. Bakker, Etienne Saur, Sylvain Pellerin, Laurent Augusto et Christian Morel. 2010b. Quantifying gross minéralisation of P in dead soil organic matter: Testing an isotopic dilution method. Geoderma 158 (2010) 163-172

Anderson, RV, ET Elliott, JF McClellan, DC Coleman, CV Cole et HW Hunt. 1978. Trophic Interactions in Soils as They Affect Energy and Nutrient Dynamics. III. Biotic Interactions of Bacteria, Amoebae, and Nematodes. Microbial Ecology, Vol. 4, No. 4 (1977 - 1978), pp. 361-371

Balota, EL, A Colozzi-Filho, DS Andrade et RP Dick. 2003. Microbial biomass in soils under different tillage and crop rotation systems. Biol Fertil Soils (2003) 38:15-20

Beardsley 2011. Peak phosphorus. BIOSCIENCE, février 2011 / VOL. 61 NO. 2, page 91. (www.biosciencemag.org)

Bermudez, Manuel et Antonio P. Mallarino. 2002. Yield and Early Growth Responses to Starter Fertilizer in No-Till Corn Assessed with Precision Agriculture Technologies. Agron. J. 94:1024-1033 (2002)

Bermudez, Manuel et Antonio P. Mallarino. 2004. Corn Response to Starter Fertilizer and Tillage across and within Fields Having No-Till Management Histories. Agron. J. 96:776-785 (2004)

Bhadoria, PBS, J Kaselowsky, N Claassen et A Jungk. 1991. Soil phosphate diffusion coefficients : their dependence on phosphorus concentration and buffer power. Soil Sci. Soc. Am. J. 55 f: 56-60

Bond, PL., R Erhart, M Wagner, J Keller et LL Blackal. 1999. Identification of Some of the Major Groups of Bacteria in Efficient and Non efficient Biological Phosphorus Removal Activated Sludge Systems. Appl. Environ. Microbiol. Sept. 1999, p. 4077-4084 Vol. 65, No. 9

Bünemann, Else K.,Astrid Oberson et Emmanuel Frossard (eds). 2011. Phosphorus in Action Biological Processes in Soil Phosphorus Cycling. Soil Biology Volume 26, www.springer.com/series/5138. Springer Heidelberg Dordrecht London NY

CDA Dordogne 2012. Optimiser la fertilisation azotée des céréales. www.dordogne.chambagri.fr - 31/01/2012 - Document réalisé par le Groupe Agronomie en collaboration avec Arvalis

CDA Dordogne 2013. Optimiser la fertilisation azotée des céréales. www.dordogne.chambagri.fr - 06/02/2013 - Document réalisé par le Groupe Agronomie en collaboration avec Arvalis.

Chen, G. C. et Z. L. He. 2002. Microbial biomass phosphorus turnover in variable-charge soils in China. COMMUN. SOIL SCI. PLANT ANAL., 33(13&14), 2101-2117 (2002)

Claude, P-Ph. et L. Fillion. 2004. Effet de l'apport d'un inoculum bactérien aux RCS de maïs-grain au sol sur le rendement et la qualité de blés d'hiver panifiables en France. Agrosolutions 15(1) : 23-29 (http://www.irda.qc.ca/publications/1.htm)/http://www.citeulike.org/user/Polyor/order/to_read

Claude, P-Ph. et M. Giroux. 2006. Engrais organo-minéraux inoculant (EOMI) pour le démarrage du maïs-grain au Québec. Agrosolutions 17: 51-64 (http://www.irda.qc.ca/publications/1.htm) / http:/lwww.citeulike.org/user/Polyor/order/to_read

Cole, CV, ET Elliott, HW Hunt et DC Coleman. 1978. Trophic Interactions in Soils as They Affect Energy and Nutrient Dynamics. V. Phosphorus Transformations. Microbial Ecology, Vol. 4, No. 4 (1977 - 1978), pp. 381-387

COMIFER 2007. Fertilisation PK : grille de calcul de dose. Le groupe PKMg du COMIFER 2007

Doolette, Ashlea L. et Ronald J. Smernik. 2011. Soil Organic Phosphorus Speciation Using Spectroscopic Techniques. In Else K. Bünemann, Astrid Oberson et Emmanuel Frossard (eds). 2011. Phosphorus in Action Biological Processes in Soil Phosphorus Cycling. Soil Biology Vol. 26, www.springer.com/series/5138. Springer Heidelberg Dordrecht London NY.

Doolette, A. L., Smernik, R. J. and Dougherty, W. J. (2010), Rapid decomposition of phytate applied to a calcareous soil demonstrated by a solution 31P NMR study. European Journal of Soil Science, 61: 563-575

FARDEAU, JC, Ch MOREL et R BONIFACE. 1988. Pourquoi choisir la méthode Olsen pour estimer le P assimilable des sols ? Agronomie 8(7):577-584

FOHSE, D, N CLAASSEN et A JUNGK. 1991. Phosphorus efficiency of plants II. Significance of root radius, root hairs and cation-anion balance for phosphorus influx in seven plant species. Plant and Soil 132: 261-272

Frossard, E, DL Achat, SM Bernasconi, EK Bünemann, J-CI Fardeau, J Jansa, C Morel, L Rabeharisoa, L Randriamanantsoa, S Sinaj, F Tamburini, et A Oberson. 2011. The Use of Tracers to Investigate Phosphate Cycling in Soil-Plant Systems. In : Bünemann et al. 2011 (eds), chapître 3.

Gaillards et al. 1999. Carbon, nitrogen and microbial gradients induces by plant residues decomposing in soil. Eur. J. Soil Sci. 50 : 567-578

Gaillard, V., C. Chenu et S. Recous. 2003. Soil Biology & Biochemistry 35 (2003) 93-99 www.elsevier.com/locate/soilbio Carbon minéralisation in soil adjacent to plant residues of contrasting biochemical quality.

Idriss, Elsorra E., Oliwia Makarewicz, Abdelazim Farouk, Kristin Rosner, Ralf Greiner, Helmut Bochow, Thomas Richter et Rainer Borriss. 2002. Extracellular phytase activity of Bacillus amyloliquefaciens FZB45 contributes to its plant-growth-promoting effect. Microbiology (2002), 148, 2097-2109.

Kaselowsky, J.; Bhadoria, P. B. S.; Claassen, N.; Jungk, A. 1990. A method for determining phosphate diffusion coefficients by bulk diffusion in soil. Zeitschrift für Pflanzenernährung und Bodenkunde 1990 Vol. 153 No. 2 pp. 89-91

MAPAQ 2003. Effets des apports d'engrais minéraux phosphatés dans les démarreurs à maïs-grain en complément des apports de P provenant des engrais de ferme selon la saturation en P des sols. Agri-Réseau:http://www.agrireseau.qc.ca/Grandescultures/ (maïs/régie/fertilisation)

Morel, C. 2002. Caractérisation de la phytodisponiblite du P du sol par la modélisation du transfert des ions phosphates entre le sol et la solution. Mémoire préparé en vue de l'obtention du diplôme d'habilitation à diriger des recherches INRA -Bordeaux / INPL

Morel et al. 2004. Evolution sur 12 ans de la solubilité, mobilité et lixiviation du phosphate dans un sol ayant massivement reçu du lisier. Étude et Gestion des Sols, 11, 4, 2004, pages 403-417

Morel et al. 2011. Gestion à long terme de la dynamique du P dans les sols cultives. In : Gestion à long terme de la dynamique du P dans les sols cultivés, Morel C. et al. 10ième rencontres de la fertilisation raisonnée et de l'analyse, COMIFER-GEMAS, Reims, 23-24 novembre 2011

Mulvaney, RL., SA. Khan, and TR. Ellsworth. 2009. Synthetic Nitrogen Fertilizers Deplete Soil Nitrogen: A Global Dilemma for Sustainable Cereal Production. J. Environ. Qual. 38:2295-2314 (2009).

NAZ, F, A maqboolet, D KAUSER et A MALIK. 2013. Degradation of legume phytate in soil using fungal phytase. Pak. J. Bot., 45(3): 1017-1022, 2013

Negassa, Wakene et Peter Leinweber. 2009. How does the Hedley sequential phosphorus fractionation reflect impacts of land use and management on soil phosphorus: A review. J. Plant Nutr. Soil Sci. 2009, 172, 305-325

Oehl, Fritz, Emmanuel Frossard , Andreas Fliessbach , David Dubois , Astrid Oberson. 2004. Basal organic phosphorus mineralization in soils under different farming systems. Soil Biology & Biochemistry 36 (2004) 667-675

Oehl, Fritz, Astrid Oberson, Mirjam Probst Andreas Fliessbach. Hans-Rudolf Roth Emmanuel Frossard. 2001. Kinetics of microbial phosphorus uptake in cultivated soils. Biol Fertil Soils (2001) 34:31-41

Olsen, S.R., C.V. Cole, F.S. Watanabe, and L.A. Dean. 1954. Estimation of available phosphorus in soils by extraction with sodium bicarbonate. U.S. Dep. of Agric, Circ. 939.

Renneson M. et al. 2008. Etude critique du taux de saturation en P dans des sols agricoles en région wallonne en tant qu'indicateur de bonnes pratiques en matière de fertilisation phosphorée. Dossier GRENeRA 08-08 27 p. In Marcoen J.M. et al. 2009. Programme de gestion durable de l'azote en agriculture wallonne - Rapport d'activités annuel intermédiaire 2008 des membres scientifiques de la Structure d'encadrement Nitrawal. Faculté Universitaire des Sciences Agronomiques de Gembloux et Université catholique de Louvain

Rodriguez,H., R. Fraga , T. Gonzalez & Y, Bashan. 2006. Genetics of phosphate solubilization and its potential applications for improving plant growth-promoting bacteria. Plant and Soil (2006) 287:15-21

Watson et Mullen 2007. Understanding Soil Tests for Plant-Available Phosphorus. Fact Sheet School of Environment and Natural Resources, 2021 Coffey Road, Columbus, OH 43210. June 2007-3373

Sidat, M., F Bux et HC Kasan. 1999. Polyphosphate accumulation by bacteria isolated from activated sludge. Water SA Vol. 25 No. 2 April 1999, pp. 175-178 / www.wrc.org.za ISSN 0378-4738

Siuda, W. et R. J. Chróst. 2001. Utilization of Selected Dissolved Organic Phosphorus Compounds by Bacteria in Lake Water under Non-limiting Orthophosphate Conditions. Polish Journal of Environmental Studies 10(6) : 475-483

Vaccari, D. A. (2009). Phosphorus: A Looming Crisis. Scientific American, 300(6), 54. Retrieved from http://web.mit.edu/12.000/www/m2016/pdf/scientificamerican0609-54.pdf

Zhao et Liu 2013. Organic and inorganic phosphorus uptake by bacteria in a plug-flow microcosm. Front. Environ. Sci. Eng. 7(2) : 173-184

Zou, X, D Binkley et KG Doxtader. 2003. A new method for estimating gross phosphorus mineralization and immobilzation rates i soils. Plant and Souil 147 : 243-250.

**Revendications**

1. **Procédé de fertilisation en phosphore (P) de cultures agronomiques** comportant l'application d'engrais P starter et/ou complémentaires à la culture suivante, cela en présence des RCS (RCS) générés par la culture précédente préalablement bactérisés et enfouis au début de l'interculture, procédé ici **caractérisé en ce que** ;

   ➢ les biomasses bactériennes servant à la bactérisation des RCS sont particulièrement phospho-immobilisatrices *et* ne produisent pas *nécessairement* de phosphatases, de phytases, d'acides organiques et/ou toutes autres molécules capables de minéraliser, solubiliser et/ou rendre immédiatement plus biodisponible le P, organique ou inorganique, du sol et/ou des RCS,

   et **en ce que** ;

   ➢ le caractère phospho-immobilisatrices des biomasses bactériennes est préalablement évalués in vitro en milieux de culture au cours d'une période d'incubation, les biomasses les plus phospho-immobilisatrices étant celles le plus capables de réduire la concentration initiale en P biodisponible dudit milieu de culture par rapport à des biomasses bactériennes de références qui le sont moins, les biomasses bactériennes en milieu de culture les moins capables de phospho-immobilisation immobilisant aussi peu que 3 mg-P/L de milieu de culture, et celles les plus capables de phospho-immobilisation plus de 20 mg-P/L, soit plus de 5 à 7 fois plus que ces biomasses microbienne témoins de références les moins performantes en ce sens.

2. **Procédé de fertilisation en phosphore (P) de cultures agronomiques** selon la revendication précédente **caractérisé en ce que** les engrais P starter sont apportés à la fin de l'interculture-1, au semis en proximité des semences, tandis que les engrais complémentaires sont apportés à la fin de l'interculture-2, avantageusement à la volée, une fois la culture suivante déjà établie, sachant que l'interculture-1 est l'interculture comprenant la période entre la récolte de la culture précédente générant les RCS et le semis de la culture suivante, tandis que l'interculture-2 est l'interculture comprenant la période entre la récolte de la susdite culture précédente générant les RCS et la date du premier apport d'engrais N (N1) à la culture suivante déjà établie.

3. **Procédé de fertilisation en phosphore (P) de cultures agronomiques** selon une quelconque des revendications précédentes **caractérisé en ce que** la culture suivante ainsi fertilisée à l'aide d'engrais P starter à la fin de l"interculture-1 est une culture de printemps telle que le maïs, et **en ce que** la culture suivante ainsi fertilisée à l'aide d'engrais P complémentaires à la fin de l'interculture-2 est une culture d'hiver telle que le blé.

4. **Procédé de fertilisation en phosphore (P) de cultures agronomiques** selon la revendication 3 **caractérisé en ce que** dans le cas des cultures dites ici de printemps recevant des engrais P starter, l'interculture-1 est d'une durée de 3 à 9 mois, plus particulièrement en zone tempérées de l'hémisphère nord de septembre à mai, et avantageusement ainsi d'octobre à avril.

5. **Procédé de fertilisation en phosphore (P) de cultures agronomiques** selon la revendication 3 **caractérisé en ce que** dans le cas des cultures dites ici d'hiver recevant des engrais complémentaires, l'interculture-2 est d'une durée de 3 à 8 mois, plus particulièrement en zone tempérées de l'hémisphère nord de septembre à février, et avantageusement ainsi d'octobre à janvier.

6.  **Procédé de fertilisation en phosphore (P) de cultures agronomiques** selon une quelconque des revendications précédentes **caractérisé en ce que** l'application in situ des bactéries sur RCS de la culture précédente ce fait par pulvérisation liquide avant leur enfouissement.

7.  **Procédé de fertilisation en phosphore (P) de cultures agronomiques** selon une quelconque des revendications précédentes **caractérisé en ce que** la culture précédente est une culture céréalière et/ou d'hiver produisant des RCS cellulosiques, et **en ce que** la culture suivante est une culture de printemps pouvant bénéficier d'engrais P starter.

8.  **Procédé de fertilisation en phosphore (P) de cultures agronomiques** selon la revendication précédente **caractérisé en ce que** le caractère bénéfique de l'engrais P est fonction de la teneur en P du sol exprimée sur la base de la teneur initiale en P du sol (STP ; mg-P/kg-sol), le pouvoir tampon du sol à l'égards du P (PTS ; [mg-P/kg-sol]/[mgP/L de solution du sol]) et/ou le taux de saturation en P du sol (TSP ; $P_{\text{échangeable}}$/([$0,5 \cdot [Al]+[Fe]$)), l'efficacité relative escomptée de telles applications étant moindre si ces valeurs de STP, PTS et TSP sont importantes.

9.  **Procédé de fertilisation en phosphore (P) de cultures agronomiques** selon la revendication précédente **caractérisé en ce que** les valeurs de STP au sens de $P_{\text{Olsen}}$ ou de Pr (mg-P/kg-sol) sont inférieures à 100, de PTS ([mg-P/kg-sol]/[mgP/L de solution du sol]) inférieures à 100, et de TSP inférieures à 100% au sens de ($P_{\text{échangeable}}$/([$0,5 \cdot [Al] + [Fe]$)).

Figure 1

Figure 2

Figure 3

Figure 4

Figure 5

Figure 6

Figure 7-i

Figure 7-ii

Figure 7-iii

y = -0,0002x + 1,0601
R² = 0,9449

Figure 8-i

y = -0,0005x + 1,0616
R² = 0,9459

Figure 8-ii

y = -0,0453x + 1,0789
R² = 0,5368

Figure 8-iii

Figure 9

Figure 10

$$y = 25,617x^{0,4243}$$
$$y = 10,171x^{0,4243}$$
$$y = 7,8419x^{0,4243}$$
$$y = 6,6329x^{0,4243}$$
$$y = 4,9347x^{0,4243}$$
$$y = 1,8861x^{0,4243}$$
$$y = 0,8107x^{0,4243}$$

Figure 11

Figure 12

Europäisches
Patentamt

European
Patent Office

Office européen
des brevets

## RAPPORT DE RECHERCHE EUROPEENNE

Numéro de la demande

EP 16 18 6924

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | Agriculture Nouvelle: "Le phosphore: un élément indispensable mais pas toujours disponible dans le sol", , 4 mars 2015 (2015-03-04), XP002753720, Extrait de l'Internet: URL:http://www.agriculture-nouvelle.fr/phosphore-fertilisation-indispensable/ [extrait le 2016-02-02] * le document en entier * ----- | 1-9 | INV. A01N59/26 A01N63/02 |
| Y | CN 102 476 964 A (INST APPLIED ECOLOGY CAS) 30 mai 2012 (2012-05-30) * exposé 1, exposé 2, résumé de l'invention * ----- | 1-9 | |
| Y | US 5 578 486 A (ZHANG LING Y [US]) 26 novembre 1996 (1996-11-26) * abrégé * * colonne 12, ligne 35 - colonne 13, ligne 5 * ----- | 1-9 | |
| | | | DOMAINES TECHNIQUES RECHERCHES (IPC) A01N |

Le présent rapport a été établi pour toutes les revendications

| Lieu de la recherche | Date d'achèvement de la recherche | Examinateur |
|---|---|---|
| Munich | 13 octobre 2016 | Butkowskyj-Walkiw, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 16 18 6924

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-10-2016

| Document brevet cité au rapport de recherche | Date de publication | Membre(s) de la famille de brevet(s) | Date de publication |
|---|---|---|---|
| CN 102476964 A | 30-05-2012 | AUCUN | |
| US 5578486 A | 26-11-1996 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2833016
- EP 13366005 A
- FR 2880344 A1
- FR 2941589 A1
- FR 1300882
- FR 1300883

**Littérature non-brevet citée dans la description**

- **ACHAT, DAVID L. ; CHRISTIAN MOREL ; MARK R. BAKKER ; LAURENT AUGUSTO ; SYLVAIN PELLERIN ; ANNE GALLET-BUDYNEK ; MAYA GONZALEZ.** Assessing turnover of microbial biomass phosphorus: Combination of an isotopic dilution method with a mass balance model. *Soil Biology & Biochemistry,* 2010, vol. 42, 2231e2240
- **ACHAT, DAVID L. ; MARK R. BAKKER ; ETIENNE SAUR ; SYLVAIN PELLERIN ; LAURENT AUGUSTO ; CHRISTIAN MOREL.** Quantifying gross minéralisation of P in dead soil organic matter: Testing an isotopic dilution method. *Geoderma,* 2010, vol. 158, 163-172
- **ANDERSON, RV ; ET ELLIOTT ; JF MCCLELLAN ; DC COLEMAN ; CV COLE ; HW HUNT.** Trophic Interactions in Soils as They Affect Energy and Nutrient Dynamics. III. Biotic Interactions of Bacteria, Amoebae, and Nematodes. *Microbial Ecology,* 1977, vol. 4 (4), 361-371
- **BALOTA, EL ; A COLOZZI-FILHO ; DS ANDRADE ; RP DICK.** Microbial biomass in soils under different tillage and crop rotation systems. *Biol Fertil Soils,* 2003, vol. 38, 15-20
- **BEARDSLEY.** Peak phosphorus. *BIOSCIENCE,* Février 2011, vol. 61 (2), 91, www.biosciencemag.org
- **BERMUDEZ, MANUEL ; ANTONIO P. MALLARINO.** Yield and Early Growth Responses to Starter Fertilizer in No-Till Corn Assessed with Precision Agriculture Technologies. *Agron. J.,* 2002, vol. 94, 1024-1033
- **BERMUDEZ, MANUEL ; ANTONIO P. MALLARINO.** Corn Response to Starter Fertilizer and Tillage across and within Fields Having No-Till Management Histories. *Agron. J.,* 2004, vol. 96, 776-785
- **BHADORIA, PBS ; J KASELOWSKY ; N CLAASSEN ; A JUNGK.** Soil phosphate diffusion coefficients : their dependence on phosphorus concentration and buffer power. *Soil Sci. Soc. Am. J.,* 1991, vol. 55 f, 56-60
- **BOND, PL. ; R ERHART ; M WAGNER ; J KELLER ; LL BLACKAL.** Identification of Some of the Major Groups of Bacteria in Efficient and Non efficient Biological Phosphorus Removal Activated Sludge Systems. *Appl. Environ. Microbiol.,* Septembre 1999, vol. 65 (9), 4077-4084
- Phosphorus in Action Biological Processes in Soil Phosphorus Cycling. Soil Biology. Springer Heidelberg, 2011, vol. 26
- Optimiser la fertilisation azotée des céréales. Groupe Agronomie en collaboration avec Arvalis, 2012
- Optimiser la fertilisation azotée des céréales. Groupe Agronomie en collaboration avec Arvalis, 2013
- **CHEN, G. C. ; Z. L. HE.** Microbial biomass phosphorus turnover in variable-charge soils in China. *COMMUN. SOIL SCI. PLANT ANAL.,* 2002, vol. 33 (13&14), 2101-2117
- **CLAUDE, P-PH. ; L. FILLION.** Effet de l'apport d'un inoculum bactérien aux RCS de maïs-grain au sol sur le rendement et la qualité de blés d'hiver panifiables en France. *Agrosolutions,* 2004, vol. 15 (1), 23-29, http://www.citeulike.org/user/Polyor/order/to_read
- **CLAUDE, P-PH. ; M. GIROUX.** Engrais organo-minéraux inoculant (EOMI) pour le démarrage du maïs-grain au Québec. *Agrosolutions,* 2006, vol. 17, 51-64, http:/lwww.citeulike.org/user/Polyor/order/to_read
- **COLE, CV ; ET ELLIOTT ; HW HUNT ; DC COLEMAN.** Trophic Interactions in Soils as They Affect Energy and Nutrient Dynamics. V. Phosphorus Transformations. *Microbial Ecology,* 1977, vol. 4 (4), 381-387
- Fertilisation PK : grille de calcul de dose. Le groupe PKMg du COMIFER, 2007
- Soil Organic Phosphorus Speciation Using Spectroscopic Techniques. **DOOLETTE, ASHLEA L. ; RONALD J. SMERNIK.** Phosphorus in Action Biological Processes in Soil Phosphorus Cycling. Soil Biology. Springer Heidelberg, 2011, vol. 26

- **DOOLETTE, A. L. ; SMERNIK, R. J. ; DOUGHERTY, W. J.** Rapid decomposition of phytate applied to a calcareous soil demonstrated by a solution 31P NMR study. *European Journal of Soil Science,* 2010, vol. 61, 563-575
- **FARDEAU, JC ; CH MOREL ; R BONIFACE.** Pourquoi choisir la méthode Olsen pour estimer le P assimilable des sols ?. *Agronomie,* 1988, vol. 8 (7), 577-584
- **FOHSE, D ; N CLAASSEN ; A JUNGK.** Phosphorus efficiency of plants II. Significance of root radius, root hairs and cation-anion balance for phosphorus influx in seven plant species. *Plant and Soil,* 1991, vol. 132, 261-272
- **FROSSARD, E ; DL ACHAT ; SM BERNASCONI ; EK BÜNEMANN ; J-CI FARDEAU ; J JANSA ; C MOREL ; L RABEHARISOA ; L RANDRIAMANANTSOA ; S SINAJ.** The Use of Tracers to Investigate Phosphate Cycling in Soil-Plant Systems. 2011
- **GAILLARDS et al.** Carbon, nitrogen and microbial gradients induces by plant residues decomposing in soil. *Eur. J. Soil Sci.,* 1999, vol. 50, 567-578
- **GAILLARD, V. ; C. CHENU ; S. RECOUS.** Carbon minéralisation in soil adjacent to plant residues of contrasting biochemical quality. *Soil Biology & Biochemistry,* 2003, vol. 35, 93-99, www.elsevier.com/locate/soilbio
- **IDRISS, ELSORRA E. ; OLIWIA MAKAREWICZ ; ABDELAZIM FAROUK ; KRISTIN ROSNER ; RALF GREINER ; HELMUT BOCHOW ; THOMAS RICHTER ; RAINER BORRISS.** Extracellular phytase activity of Bacillus amyloliquefaciens FZB45 contributes to its plant-growth-promoting effect. *Microbiology,* 2002, vol. 148, 2097-2109
- **KASELOWSKY, J. ; BHADORIA, P. B. S. ; CLAASSEN, N. ; JUNGK, A.** A method for determining phosphate diffusion coefficients by bulk diffusion in soil. *Zeitschrift für Pflanzenernährung und Bodenkunde,* 1990, vol. 153 (2), 89-91
- *Effets des apports d'engrais minéraux phosphatés dans les démarreurs à maïs-grain en complément des apports de P provenant des engrais de ferme selon la saturation en P des sols,* 2003, http://www.agrireseau.qc.ca/Grandescultures
- **MOREL, C.** Caractérisation de la phytodisponiblite du P du sol par la modélisation du transfert des ions phosphates entre le sol et la solution. *Mémoire préparé en vue de l'obtention du diplôme d'habilitation à diriger des recherches INRA -Bordeaux / INPL,* 2002
- **MOREL et al.** Evolution sur 12 ans de la solubilité, mobilité et lixiviation du phosphate dans un sol ayant massivement reçu du lisier. *Étude et Gestion des Sols,* 2004, vol. 11 (4), 403-417
- **MOREL et al.** Gestion à long terme de la dynamique du P dans les sols cultives. In : Gestion à long terme de la dynamique du P dans les sols cultivés. *10ième rencontres de la fertilisation raisonnée et de l'analyse, COMIFER-GEMAS, Reims,* 23 Novembre 2011
- **MULVANEY, RL. ; SA. KHAN ; TR. ELLSWORTH.** Synthetic Nitrogen Fertilizers Deplete Soil Nitrogen: A Global Dilemma for Sustainable Cereal Production. *J. Environ. Qual.,* 2009, vol. 38, 2295-2314
- **NAZ, F ; A MAQBOOLET ; D KAUSER ; A MALIK.** Degradation of legume phytate in soil using fungal phytase. *Pak. J. Bot.,* 2013, vol. 45 (3), 1017-1022
- **NEGASSA, WAKENE ; PETER LEINWEBER.** How does the Hedley sequential phosphorus fractionation reflect impacts of land use and management on soil phosphorus: A review. *J. Plant Nutr. Soil Sci.,* 2009, vol. 172, 305-325
- **OEHL, FRITZ ; EMMANUEL FROSSARD ; ANDREAS FLIESSBACH ; DAVID DUBOIS ; ASTRID OBERSON.** Basal organic phosphorus mineralization in soils under different farming systems. *Soil Biology & Biochemistry,* 2004, vol. 36, 667-675
- **OEHL, FRITZ ; ASTRID OBERSON ; MIRJAM PROBST ANDREAS FLIESSBACH ; HANS-RUDOLF ROTH EMMANUEL FROSSARD.** Kinetics of microbial phosphorus uptake in cultivated soils. *Biol Fertil Soils,* 2001, vol. 34, 31-41
- **OLSEN, S.R. ; C.V. COLE ; F.S. WATANABE ; L.A. DEAN.** Estimation of available phosphorus in soils by extraction with sodium bicarbonate. U.S. Dep. of Agric, Circ, 1954, 939
- Etude critique du taux de saturation en P dans des sols agricoles en région wallonne en tant qu'indicateur de bonnes pratiques en matière de fertilisation phosphorée. Dossier GRENeRA 08-08 27 p. **RENNESON M. et al.** Programme de gestion durable de l'azote en agriculture wallonne - Rapport d'activités annuel intermédiaire 2008 des membres scientifiques de la Structure d'encadrement Nitrawal. Faculté Universitaire des Sciences Agronomiques de Gembloux et Université catholique de Louvain, 2008
- **RODRIGUEZ,H. ; R. FRAGA ; T. GONZALEZ ; Y, BASHAN.** Genetics of phosphate solubilization and its potential applications for improving plant growth-promoting bacteria. *Plant and Soil,* 2006, vol. 287, 15-21
- **WATSON ; MULLEN.** Understanding Soil Tests for Plant-Available Phosphorus. *Fact Sheet School of Environment and Natural Resources,* Juin 2007, 3373
- **SIDAT, M. ; F BUX ; HC KASAN.** *Polyphosphate accumulation by bacteria isolated from activated sludge. Water SA,* Avril 1999, vol. 25 (2), ISSN 0378-4738, 175-178, www.wrc.org.za

- **SIUDA, W. ; R. J. CHRÓST.** Utilization of Selected Dissolved Organic Phosphorus Compounds by Bacteria in Lake Water under Non-limiting Orthophosphate Conditions. *Polish Journal of Environmental Studies,* 2001, vol. 10 (6), 475-483
- **VACCARI, D. A.** Phosphorus: A Looming Crisis. *Scientific American,* 2009, vol. 300 (6), 54, http://web.mit.edu/12.000/www/m2016/pdf/scientificamerican0609-54.pdf
- **ZHAO ; LIU.** Organic and inorganic phosphorus uptake by bacteria in a plug-flow microcosm. *Front. Environ. Sci. Eng.,* 2013, vol. 7 (2), 173-184
- **ZOU, X ; D BINKLEY ; KG DOXTADER.** A new method for estimating gross phosphorus mineralization and immobilzation rates i soils. *Plant and Souil,* 2003, vol. 147, 243-250